# EUROPÄISCHE PATENTSCHRIFT

(11) **EP 2 737 277 B1**
(45) Veröffentlichungstag und Bekanntmachung des Hinweises auf die Patenterteilung: **27.03.2019**
(21) Anmeldenummer: 12740357.4
(22) Anmeldetag: 25.07.2012
(51) Int. Cl.: G01C 1/02, G02B 5/28, G01C 15/00, G01B 11/00

(54) **OPTISCHES MESSSYSTEM MIT FILTEREINHEIT ZUR EXTRAKTION ELEKTROMAGNETISCHER STRAHLUNG**
OPTICAL MEASUREMENT SYSTEM WITH FILTER UNIT FOR EXTRACTING ELECTROMAGNETIC RADIATION
SYSTÈME DE MESURE OPTIQUE DOTÉ D'UNE UNITÉ DE FILTRE POUR L'EXTRACTION D'UN RAYONNEMENT ÉLECTROMAGNÉTIQUE

(30) Priorität: 26.07.2011 EP 11175392
(43) Veröffentlichungstag der Anmeldung: 04.06.2014
(73) Patentinhaber: Hexagon Technology Center GmbH, 9435 Heerbrugg (CH)
(72) Erfinder: HINDERLING, Jürg, 9437 Marbach (CH); SIERCKS, Knut, 9402 Mörschwil (CH)
(74) Vertreter: Kaminski Harmann
(86) Internationale Anmeldenummer: PCT/EP2012/064606
(87) Internationale Veröffentlichungsnummer: WO 2013/014190

(56) Entgegenhaltungen:
- EP-A1- 0 498 375
- EP-A1- 2 120 082
- WO-A1-97/40420
- US-A1- 2001 024 270
- US-A1- 2003 173 499
- US-A1- 2004 178 322
- US-A1- 2005 018 301
- US-A1- 2010 142 067

## Beschreibung

Die Erfindung betrifft ein optisches Messsystem zur Bestimmung von Koordinaten von Punkten mit einer Strahlungsquelle und einer Empfangseinheit mit einer Filtereinheit zur Extraktion elektromagnetischer Strahlung eines definierten Wellenlängenbereichs nach dem Oberbegriff des Anspruchs 1, eine Verwendung der Filtereinheit zur Extraktion elektromagnetischer Strahlung mit einem optischen Messsystem nach Anspruch 12 und ein entsprechendes Verfahren nach Anspruch 13. Zum Vermessen eines Zielpunktes sind seit der Antike zahlreiche geodätische Vermessungsgeräte bekannt. Als räumliche Standarddaten werden dabei Richtung bzw. Winkel und meist auch Entfernung von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für solche geodätische Vermessungsgeräte stellen Theodolit, Tachymeter, Totalstation und auch Laserscanner, die in den Varianten terrestrisch und airborne ausgeführt sind, dar. Eine geodätische Messvorrichtung des Stands der Technik ist beispielsweise in der Veröffentlichungsschrift EP 1 686 350 beschrieben. Derartige Geräte verfügen über elektrosensorische Winkel- und ggf. Distanzmessfunktion, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

Moderne Totalstationen verfügen über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Anwendung sind Totalstationen zudem mit einer Motorisierung der Anziel- bzw. Visiereinrichtung sowie - im Fall der Verwendung von Retroreflektoren (etwa eines Rundum-Prismas) als Ziel-Objekte - Mittel zur automatischen Zielsuche und -verfolgung ausgerüstet. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist.

Zum Anvisieren bzw. Anzielen des zu vermessenden Zielpunkts weisen gattungsgemässe geodätische Vermessungsgeräte wie Totalstationen ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers - dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z.B. durch Servomotoren erfolgt. Beispielsweise ist eine solche Visiereinrichtung eines geodätischen Vermessungsgeräts in der EP 2 219 011 beschrieben. Automatische Fokussiereinrichtungen für Zielfernrohre geodätischer Geräte sind z.B. aus der DE 197 107 22, der DE 199 267 06 oder der DE 199 495 80 bekannt. Zudem ist der Aufbau gattungsgemässer Zielfernrohre von geodätischen Geräten beispielhaft in den Veröffentlichungsschriften EP 1 081 459 oder EP 1 662 278 gezeigt.

Aufgrund des meist sowohl als Sichtkanal als auch für Messungen gemeinsam zu nutzenden Strahlengangs erfordern solche Geräte dessen technische Auslegung in der Bauweise eines Teleskops mit spezialisierten, hochpräzisen und aufwändig herzustellenden Optiken. Des Weiteren können für die koaxiale elektronische Distanzmessung ein zusätzlicher separater Sende- und Empfangskanal sowie eine zusätzliche Bildebene für die Wellenlänge des Distanzmessers vorgesehen sein.

Da Zielobjekte (z.B. die für geodätische Zwecke meist verwendeten Lotstäbe mit Zielmarke wie einem Rundum-Prisma) anhand der Visiereinrichtung trotz der oft bereitgestellten 30-fachen optischen Vergrösserung mit blossem Auge nicht genügend präzise angezielt werden können, weisen gängige Vermessungsgeräte inzwischen standardmässig eine automatische Zielverfolgungs-Funktion für als ZielReflektor dienende Prismen (ATR: "Automatic Target Recognition") auf. Dafür sind gängigerweise eine weitere separate ATR-Lichtquelle - z.B. eine fasergekoppelte Laserdiode, die elektromagnetische Strahlung mit einer Wellenlänge vorzugsweise im infraroten Bereich von beispielsweise 850 nm emittiert - und ein spezieller, für diese Wellenlänge sensitiver ATR-Detektor (z.B. CMOS-Flächensensor) zusätzlich im Teleskop integriert.

Im Rahmen der ATR-Feinanzielfunktion wird dabei in Richtung der optischen Zielachse der Visiereinrichtung der ATR-Messstrahl emittiert, dieser wird am Zielreflektor retroreflektiert und der reflektierte Strahl vom ATR-Sensor erfasst. Je nach Abweichung der Ausrichtung der optischen Zielachse vom Prisma weicht dabei auch die Auftreffposition der reflektierten Strahlung auf dem ATR-Sensor von einer zentralen Sensorflächenposition ab (d.h. der Reflexfleck des am Prisma retro-reflektierten ATR-Messstrahls auf dem ATR-Flächensensor liegt nicht im Zentrum des ATR-Flächensensors und trifft somit nicht auf einer SollPosition auf, die z.B. anhand Kalibrierung als jene mit der optischen Zielachse korrespondierende Position festgelegt wurde).

Ist dies der Fall, so wird motorisiert die Ausrichtung der Visiereinrichtung derart geringfügig nachgestellt, dass der am Prisma retro-reflektierte ATR-Messstrahl hochpräzise im Zentrum der Sensorfläche auf dem ATR-Flächensensor auftrifft (d.h. die Horizontal- und Vertikalwinkel der Visiereinrichtung werden derart iterativ geändert und angepasst, bis das Zentrum des Reflexflecks mit der SollPosition auf dem ATR-Flächensensor zusammenfällt). Alternativ kann eine Rest-Abweichung zwischen Auftreffpunkt des retro-reflektierten ATR-Messstrahls auf dem ATR-Flächensensor und dem Zentrum der Sensorfläche auch rechnerisch berücksichtigt und in einen Winkel umgewandelt werden, der zu dem - anhand der Winkelsensoren erfassten - Raumwinkel, in den die Zielachse zeigt, entsprechend addiert wird.

Neben der ATR-Feinanzielfunktion kann auf ähnliche Weise und unter Verwendung derselben ATR-Komponenten (wie ATR-Lichtquelle und ATR-Detektor) auch eine automatische Zielverfolgungs-Funktionalität bereitgestellt sein.

Eine Beeinträchtigung der Distanzmessung oder der automatischen Zielverfolgen kann dabei z.B. durch eine Streustrahlung verursacht werden, wobei neben der von der Strahlquelle emittierten Strahlung definierter Charakteristik weitere störende Strahlungsanteile auf den Detektor (zur Erfassung der von der Strahlquelle emittierten und reflektierten Strahlung) auftreffen und eine Abweichung eines Messwerts begründen können.

Umgebungs- oder Fremdlicht kann so zu unerwünschten Einflüssen oder Beeinträchtigungen von Messvorrichtungen führen. Richtungs- oder Positionsmessung mit optischen Halbleitersensoren (z.B. PSD) oder Flächensensoren (z.B. CCD oder CMOS) können z.B. durch parasitäres auf den Detektor treffendes Hintergrundlicht verfälscht werden. Dies führt beispielsweise zu Schwerpunktsverschiebungen, induziert durch eine modifizierte Lichtverteilung auf dem Sensor oder durch eine Veränderung des elektronischen Arbeitspunktes des Sensors.

Messvorrichtungen mit spektral schmalbandigen Strahlungsquellen wie Laserdioden bieten teilweise die Möglichkeit das Umgebungslicht auf dem Empfangskanal grösstenteils mittels eines passenden Kantenfilters oder Bandpassfilters zu unterdrücken. Vor allem Laser emittieren sehr schmalbandig in einem Spektralbereich von weniger als 1nm. Kostengünstige Laser wie Laserdioden haben aber den Nachteil, dass deren Mittenwellenlänge von Muster zu Muster verschieden ist, zudem ist die Emissionswellenlänge bei den meisten Halbleiterlaserdioden vom Arbeitspunkt (Vorwärtsstrom) und der Chiptemperatur abhängig.

Dies führt dazu, dass die in der Regel als Interferenzfilter gestalteten optischen Bandpassfilter vor dem Detektor spektral breit ausgelegt sind. Dadurch kann allerdings das Umgebungslicht nicht optimal unterdrückt werden.

Dieser Nachteil ist analog auf Koordinatenmessmaschinen mit optischen Sensoren zur Messung von Koordinaten von Messpunkten übertragbar.

Koordinatenmessmaschinen, zur Überprüfung technischer Bauteile hinsichtlich ihrer Form und ihres Ausmasses, weisen dabei einen beweglichen Messkopf auf, der innerhalb eines Messraums bewegt werden kann. Hierfür können Koordinatenmessmaschinen bekanntermassen als Portalaufbauten oder Gelenkarme aufgebaut werden, mittels derer der Messkopf frei in drei Richtungen (X,Y,Z) bewegbar ist und wobei fortlaufend und präzise die Position des Messkopfs und somit eine durch dem Messkopf optisch vermessene Position auf einem Werkstück im Messraum bestimmt werden kann.

Ferner kann die oben genannte Beeinträchtigung bei kontaktlos messenden, optischen Scannern zur Erzeugung z.B. einer dreidimensionalen Darstellung einer Oberfläche eines Objekts auftreten. Diese Scannvorrichtungen werden zumeist als Laserscanner ausgebildet, wobei eine Laserstrahlung mit definierter Wellenlänge emittiert und am Objekt reflektiert wird. Mittels eines Detektors, der im optimalen Fall ausschliesslich Licht derselben Wellenlänge erfasst und misst, können so punktaufgelöst Distanz- und Richtungsmessungen durchgeführt werden. Der Laserstrahl kann dabei zeilenweise über die Oberfläche geführt werden.

Bekannt sind auch Distanzmessmodule mit mehreren Lichtquellen unterschiedlicher Emissionswellenlänge, wie beispielsweise aus der DE 198 40 049 zu entnehmen. Dort wird je nach Messanwendung entweder der eine oder der andere Laser auf denselben gemeinsamen Detektor gelenkt, dabei ist das Interferenzfilter vor dem Empfänger als Doppelinterferenzfilter mit zwei Transmissionsfenstern ausgebildet. Dies hat den Nachteil, dass das Umgebungslicht nicht optimal unterdrückt wird. Bei mehrkanaligen Sendeeinheiten, die sich spektral-optisch unterscheiden und auf eine gemeinsame Empfangseinheit gelenkt werden, nimmt die Problematik der Unterdrückung von Streustrahlung und auch des gegenseitigen Kanalübersprechens mit der Anzahl der Kanäle zu.

Zur Lösung des Streustrahlungsproblems sind aus dem Stand der Technik zumindest zwei Ansätze bekannt. Zum einen wird in den Strahlengang der Empfangsoptik ein Filter derart vor dem Detektor angeordnet, dass ausschliesslich elektromagnetische Strahlung eines definierten Wellenlängenbereichs - möglichst schmalbandig - das Filter passieren und auf den Detektor treffen kann. Das hierfür verwendete Filter weist bekanntermassen ein vorbestimmtes Transmissionsverhalten auf. Zudem wird die Strahlungsquelle hinsichtlich der emittierten Wellenlänge mit hohem Aufwand elektronisch und thermisch stabilisiert, d.h. mit einer konstanten Spannung und Strom versorgt und bei einer definierten Temperatur, insbesondere durch Kühlen oder Heizen der Strahlquelle, betrieben. Diese spezifizierte Emissions-Empfangs-Vorrichtung erfordert ein hohes Mass an Konstruktions- und Energieaufwand.

Der zweite Ansatz schlägt die Verwendung zweier Filter vor, eines Hochpassfilters und eines Tiefpassfilters, wobei die Filter im Strahlengang hintereinander angeordnet sind und damit eine relativ gut definierte Filterwirkung erreichen. Die Filter können zudem relativ zum Strahlenverlauf gekippt werden, wodurch eine Änderung des Filterverhaltens und somit eine Anpassung an die eingehende Strahlung ermöglicht wird. Eine derartige Anordnung ist beispielsweise der DE 101 21 288 zu entnehmen. Dieses Dokument dient zur Definition der Präambel von Anspruch 1. Nachteilig an dieser Anordnung ist das Auftreten von Polarisationseffekten beim Verkippen der Filter.

Die beiden Lösungsansätze bergen zudem den Nachteil einer hochkomplexen und bauraumintensiven Konstruktion der jeweiligen Messgeräte. Zudem ist eine sehr aufwändige Steuerung bzw. Regelung der Strahlquelle bzw. der kippbaren Filter notwendig, um fortlaufend ein optimales Detektieren in der geeigneten Wellenlänge gewährleisten zu können.

Es ist daher Aufgabe der vorliegenden Erfindung ein System zur Punktvermessung bereitzustellen, das eine genauere und zuverlässigere Vermessung von Messpunkten erlaubt und mit einem geringeren konstruktiven Aufwand realisierbar ist. Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein optisches Messsystem zur Bestimmung von Koordinaten von Punkten, insbesondere zur Entfernungsmessung, insbesondere geodätisches Vermessungsgerät, Koordinatenmessmaschine oder Scannvorrichtung. Das Messsystem weist eine Strahlungsquelle zur Emission elektromagnetischer Strahlung mit einer Emissionswellenlänge und einer Empfangseinheit mit einer Filtereinheit zur Extraktion elektromagnetischer Strahlung eines definierten Wellenlängenbereichs nach dem Interferenzprinzip und einen derart angeordneten Detektor auf, dass die mittels der Filtereinheit extrahierbare Strahlung mit dem Detektor erfassbar ist. Zudem weist die Filtereinheit wenigstens zwei mehrschichtig aufgebaute, zumindest teilreflektierende Spiegelelemente auf, wobei die Spiegelelemente im Wesentlichen parallel zueinander ausgerichtet sind und jeweils zwei benachbarte Spiegelelemente eine Kavität einschliessen und mit einem bestimmten Abstand zueinander angeordnet sind. Dabei ist durch einen Brechungsindex der Kavität und durch den Abstand zwischen den Spiegelelementen eine optische Dicke definiert. Zudem weist die Filtereinheit Optische-Dicke-Veränderungsmittel zur Variation der optischen Dicke auf, sodass ein extrahierbarer Wellenlängenbereich der Filtereinheit verändert wird, insbesondere wobei die Optische-Dicke-Veränderungsmittel Stellmittel zu einer Lageveränderung der Spiegelelemente und/oder Brechindex-Einstellmittel zu einer Veränderung des Brechungsindex der Kavität aufweisen, insbesondere wobei die optische Dicke im Betrieb fortlaufend variierbar ist. Die Filtereinheit kann demnach als ein oben beschriebenes abstimmbares Interferenzfilter ausgebildet sein.

Die Optische-Dicke-Veränderungsmittel stellen dabei ein Bauteil dar, mittels dem die optische Dicke gezielt verändert werden kann. So können dabei Stellmittel, z.B. elektrostatische Akuatoren, vorgesehen sein, die eine Positionsänderung der Spiegelelemente, somit eine Abstandsänderung zwischen den Spiegeln, bewirken können. Hierfür können die Aktuatoren beispielsweise durch Steuersignale definiert ausgelenkt werden. Weiters können die Brechindex-Einstellmittel z.B. ein Medium aufweisen, dessen Brechungsindex mittels Anlegen einer definierten Spannung an das Medium verändert werden kann. Das Medium kann beispielsweise durch ein Gas, eine Flüssigkeit oder durch ein Polymer verkörpert sein. Zudem können die Brechindex-Einstellmittel eine Steuerungsuntereinheit aufweisen, die entsprechende Signale bzw. eine Spannung reguliert, mit der der Brechungsindex des Mediums eingestellt und verändert werden kann.

Abstimmbare Interferenzfilter basieren auf dielektrisch beschichteten Spiegeln, bei welchen wenigstens eine der Schichten hinsichtlich der optischen Dicke durch gestimmt werden kann. Unter optischer Dicke versteht man das Produkt aus Schichtdicke und Brechungsindex. Mittels der Multilayer-Dünnschichtbelegungen von elektromagnetisch transparenten Materialien kann fast jede erdenkliche spektrale Filterkurve realisiert werden. Die einfachsten abstimmbaren Interferenz- oder Bandpassfilter basieren auf einem Fabry-Perot Filter, der ebenfalls mit einer Multilayer-Dünnschichtbelegung versehen ist. Die Veränderung bzw. Verschiebung der Transmissions- oder Reflexionskurve erfolgt vorzugsweise nach einem elektromechanischen Verstellmechanismus wie beispielsweise piezoelektrische, elektrostatische oder magnetische Aktuatorik. Verschiebungen mit interferometrischer Genauigkeit sind nach dem elektrostatischen Prinzip erreichbar, dabei kann z.B. die Position einer Abstandsplatte oder der Abstand zwischen zwei Hauptreflektoren einer Fabry-Perot Struktur verändert werden. Zudem kann eine Veränderung der Transmissions- oder Reflexionskurve durch eine Veränderung des Brechungsindex erfolgen.

Mittels eines abstimmbaren Filters können, wie oben diskutiert, die Probleme von sich abweichenden spektralen Fenstern, sich verschiebbaren oder veränderlichen Emissionswellenlängen oder Empfängerkurven, aber auch Mehrfachwellenlängenvorrichtungen gelöst werden. Somit kann ein abstimmbares Interferenzfilter erfindungsgemäss in ein optisches Messsystem, insbesondere zur Entfernungs- und Richtungsmessung, integriert werden. Mit dem abstimmbaren Interferenzfilter soll das Umgebungs- oder Fremdlicht von der jeweiligen Detektionseinheit fern gehalten werden. Insbesondere bei Vorrichtungen mit mehreren Lichtquellen hat dies den Vorteil, dass die Unterdrückung des Umgebungslichts, z.B. des Lichts aller Lichtquellen ausgenommen der gewünschten, gleichwertig zu einem 1-Kanalsystem realisiert werden kann.

Insbesondere kann dieses Prinzip für Lasersensoren wie EDM (Distanzmessung), ATR (Automatische Zielpunktvermessung) oder Powersearch (Zielsuche) z.B. für Tachymeter, Totalstation, Laserscanner, Lasertracker oder aber auch Empfänger für Rotationslaser oder zur Baumaschinensteuerung geeignet sein. Dadurch kann das Sonnen-, Umgebungs- oder Fremdlicht vor dem jeweiligen Empfänger mit einem aktuell (zum Zeitpunkt der Benutzung oder Funktion) optimal abgeglichenen Interferenzfilter herausgefiltert werden. Da Emissionswellenlängen von Laserdioden von Muster zu Muster streuen können und zudem sich deren Wellenlänge über Temperatur und Arbeitspunkt (anliegender Strom) verschieben kann, kann ein spektral abstimmbares Bandpassfilter dabei auf die jeweilige Wellenlänge des Lasers zur Optimierung der Transmission des Filters zentriert werden. Das Fremdlicht kann so durch die schmale Transmissionskurve des abstimmbaren Filters weitgehend abgeblockt werden.

Insbesondere kann das Messsystem erfindungsgemäss eine Regelungseinheit aufweisen, wobei die Regelungseinheit derart mit den Optische-Dicke-Veränderungsmitteln zusammenwirkt, dass die optische Dicke, insbesondere der Abstand zwischen den Spiegelelementen bzw. zwischen als Spiegelelemente zu verstehenden dielektrischen Multilayerelementen, so variierbar ist, insbesondere automatisch variiert wird, dass der extrahierbare Wellenlängenbereich um die Emissionswellenlänge der emittierten Strahlung herum liegt. Damit kann in dem Messsystem, z.B. in einer Totalstation oder einem Laserscanner, eine Nutzwellenlänge des Filters so eingestellt werden, dass die zu filternde Wellenlänge derjenigen entspricht, die auch von der Strahlquelle des Systems emittiert wird.

Insbesondere kann erfindungsgemäss die Regelungseinheit derart mit den Optische-Dicke-Veränderungsmitteln und dem Detektor zusammenwirken, dass die optische Dicke in Abhängigkeit einer Detektion des Detektors einstellbar ist. Mittels einer derartigen Regelung lässt sich der Wellenlängenbereich der Filtereinheit beispielsweise fortlaufend anpassen, sodass jeweils ein Minimum an Strahlung am Detektor erfasst werden kann. Wird dabei z.B. ein Abfall der Strahlungsintensität mittels des Detektors festgestellt, so kann der Abstand der dielektrischen Multilayerelemente und/oder der Brechungsindex der Kavität im Filter solange verändert werden, insbesondere wobei der Abstand über einen breiten Abstandsbereich variierbar ist, bis ein vordefinierter Minimal- oder Schwellwert überschritten wird.

Zudem kann erfindungsgemäss die optische Dicke mittels der Optische-Dicke-Veränderungsmittel derart einstellbar sein, dass ein mittels des Detektors erfasster Messwert einen definierten Schwellwert überschreitet, insbesondere einen Maximalwert erreicht. Eine entsprechende Anpassung des Spiegelabstands und/oder der optischen Eigenschaft des Mediums in der Kavität kann somit auch zum Zweck der Beibehaltung eines optimalen (maximalen) Extraktionsvermögens des Filters für eine jeweilige Wellenlänge bzw. bei einem Drift der Wellenlänge erfolgen.

Ferner kann erfindungsgemäss der extrahierbare Wellenlängenbereich definiert sein durch eine ein Extraktionsmaximum repräsentierende Mittenwellenlänge und einen in Abhängigkeit eines Extraktionsniveau-Wellenlängen-Verlaufs definierten Toleranzbereich um die Mittenwellenlänge. Je nach Ausbildung der Filtereinheit lassen sich spezifisch angepasste Extraktionsverhalten (Transmissions- bzw. Reflexionsverhalten) der Filter definieren, wobei ein Niveau eines zu extrahierenden Strahlungsanteils in Abhängigkeit der Strahlungswellenlänge variieren kann (Extraktionsniveau-Wellenlängen-Verlauf), d.h. der Anteil an extrahierbaren Strahlung von der jeweiligen Wellenlänge der Strahlung abhängt.

Ausserdem kann erfindungsgemäss die Filtereinheit transmittierend oder reflektierend ausgebildet sein, insbesondere wobei die Filtereinheit derart ausgebildet ist, dass eine Reflexion oder Transmission von elektromagnetischer Strahlung innerhalb des extrahierbaren Wellenlängenbereichs am Filter erfolgen kann.

Zudem kann im Rahmen der Erfindung aus der mittels der Optische-Dicke-Veränderungsmitteln durchführbaren Variation der optischen Dicke eine Extraktionswellenlänge für die extrahierte Strahlung ableitbar sein, insbesondere mittels einer Messung mit dem Detektor. Das Messsystem kann so ausserdem mittels der Filtereinheit eine Bestimmung der auf dem Detektor erfassten Wellenlänge durchführbar machen. Hierzu wird z.B. der Abstand der Spiegelelemente innerhalb eines bestimmten Abstandsbereichs, wobei dieser Bereich durch die strukturelle Ausbildung der Filtereinheit begrenzt ist, verändert oder dieser Abstandsbereich durchgefahren. Gleichzeitig erfolgt eine Messung mittels des Detektors, beispielsweise eine Intensitätsmessung, und gemessene Intensitäten werden jeweils einem eingestellten Spiegelelementabstand zugeordnet. Aus den dabei generierten Daten kann ein Intensitätsmaxima mit zugehörigem Abstandswert ermittelt und in Folge aus dem Abstandswert auf die dadurch definierten Wellenlänge (Extraktionswellenlänge) des Filters und die Wellenlänge der detektierten Strahlung geschlossen werden. Analog kann auch hinsichtlich des Brechungsindex der Kavität verfahren werden. Hierbei wird beispielsweise durch Variation der den Brechungsindex bestimmenden elektrischen Spannung die Transmittivität des Filters kontrolliert verändert.

Weiterhin kann erfindungsgemäss ein Teil der von der Strahlquelle emittierten elektromagnetischen Strahlung mit einem Strahlauskoppelelement als Referenzstrahl auskoppelbar und eine Referenzwellenlänge mit einem Sensor messbar sein. Die optische Dicke kann dabei in Abhängigkeit der gemessenen Referenzwellenlänge derart einstellbar sein, dass die Referenzwellenlänge im extrahierten Wellenlängenbereich liegt. Eine solche Anordnung kann eine genaue, fortlaufende Bestimmung der jeweils emittierten Wellenlänge der Strahlquelle erlauben. Diese Referenzwellenlänge kann dann zur Justierung der Filtereinheit herangezogen werden. Der Abstand oder der Brechungsindex kann auf dieser Basis derart eingestellt werden, dass dadurch derjenige extrahierbare Wellenlängenbereich definiert ist, dessen Mittenwellenlänge zumindest im Wesentlichen der Referenzwellenlänge entspricht. Damit kann der extrahierbare Wellenlängenbereich des Filters fortlaufend in Abhängigkeit der Referenzmessung aktualisiert werden.

Darüber hinaus kann der Detektor als Photodiode, CMOS- oder PSD-Flächensensor ausgebildet sein und/oder das Messsystem zumindest eine weitere Strahlquelle mit einer weiteren Emissionswellenlänge aufweisen.

Ferner kann erfindungsgemäss die optische Dicke mittels Beaufschlagung der Optische-Dicke-Veränderungsmittel mit einem elektrischen Steuersignal, vorzugsweise einer Spannung, einstellbar sein, wobei die optische Dicke in Abhängigkeit von einem beaufschlagten Steuersignalwert einstellbar sein kann. Das Einstellen bzw. Verschieben der Position der Spiegelelemente (und damit des Transmissions- oder Reflexionsverhaltens) kann z.B. vorzugsweise elektromechanisch erfolgen. Hierfür können in den Optische-Dicke-Veränderungsmittel verbaute Aktuatoren gezielt angesteuert und mittels diesen die Spiegel bewegt werden. Durch das Anlegen einer definierten Spannung oder eines bestimmten Signals kann so ein gewünschter Abstand zwischen den Spiegeln eingestellt werden. Ausserdem kann ebenfalls durch die Beaufschlagung mit einem elektrischen Steuersignal der Brechungsindex der Kavität bzw. des Mediums in der Kavität eingestellt werden.

Erfindungsgemäss kann insbesondere die Kavität ein optisch veränderbares Medium mit einem Materialbrechungsindex aufweisen, insbesondere wobei das Medium durch ein elektroaktives Polymer verkörpert wird und der Materialbrechungsindex mittels des elektronischen Steuersignals, insbesondere durch Anlegen einer Spannung, definiert veränderbar sein kann, sodass die optische Dicke und damit der extrahierbare Wellenlängenbereich verändert wird. Mittels Materialen, deren optische Eigenschaften beispielsweise in Abhängigkeit der Höhe einer an dem Material anliegenden elektrischen Spannung justiert werden können, kann so eine Variabilität des zu extrahierenden Wellenlängenbereichs für Interferenzfilter realisiert werden.

Insbesondere kann erfindungsgemäss das System eine Datenbank aufweisen, in der eine Zuordnungstabelle mit Abständen der Spiegelelemente und jeweiligen Wellenlängenbereichen gespeichert ist, insbesondere wobei die jeweiligen Wellenlängenbereiche in Abhängigkeit von Brechungsindizes der Kavität gespeichert sind.

Ausserdem kann erfindungsgemäss der Abstand zwischen den Spiegelelementen und/oder der Brechungsindex der Kavität in Abhängigkeit einer definierten zu extrahierenden Wellenlänge mittels der Zuordnungstabelle einstellbar sein. Erfindungsgemäss kann zudem in der Datenbank eine Parametrisierung für die Strahlquelle zur Bestimmung der Emissionswellenlänge gespeichert sein und der Abstand zwischen den Spiegelelementen und/oder der Brechungsindex der Kavität in Abhängigkeit von Parametern der Parametrisierung einstellbar sein, insbesondere eine eine Abhängigkeit der Emissionswellenlänge von Strom und/oder Temperatur der Strahlquelle repräsentierende Parametrisierung.

In der Datenbank können so zum einen Zuordnungen von Spiegelabständen und dadurch definierten extrahierbaren Wellenlängenbereichen hinterlegt sein. So kann z.B. eine gewünschte Wellenlänge bzw. ein Wellenlängenbereich über eine bestimmte Abstandseinstellung der Spiegelelemente eingestellt werden. Alternativ oder zusätzlich kann ein Zusammenhang zwischen dem Brechungsindex der Kavität, dem Abstand der Spiegelelemente und dem extrahierbaren Wellenlängenbereich in der Datenbank zur Verfügung stehen. Hierfür können ferner jeweils erforderliche Steuersignale gespeichert sein und mittels einer entsprechenden Ansteuerung des Filters so der gewünschte Wellenlängenbereich angepasst werden. Darüber hinaus kann die im Messsystem angeordnete Strahlquelle in der Datenbank bzw. der Tabelle parametrisiert sein, d.h. es ist eine Zuordnung hinterlegt, die einen Zusammenhang zwischen der emittierten Wellenlänge und einem an der Strahlquelle anliegenden Strom und/oder einer Temperatur der Strahlquelle herstellbar macht. Hiermit kann der Wellenlängenbereich der Filtereinheit auf Basis des Vorwärtsstroms und/oder der Strahlquelltemperatur eingestellt und der Emissionswellenlänge angepasst werden. Die Erfindung betrifft auch die Verwendung einer Filtereinheit in einem optischen Messsystem, mit wenigstens zwei mehrschichtig aufgebauten, zumindest teilreflektierenden Spiegelelementen, wobei die Spiegelelemente im Wesentlichen parallel zueinander ausgerichtet sind und jeweils zwei benachbarte Spiegelelemente eine Kavität einschliessen und mit einem bestimmten Abstand zueinander angeordnet sind. Durch einen Brechungsindex der Kavität und durch den Abstand zwischen den Spiegelelementen ist zudem eine optische Dicke definiert. Ferner hat die Filtereinheit Optische-Dicke-Veränderungsmittel zur Variation der optischen Dicke, sodass ein extrahierbarer Wellenlängenbereich der Filtereinheit verändert wird, insbesondere wobei die Optische-Dicke-Veränderungsmittel Stellmittel zu einer Lageveränderung der Spiegelelemente und/oder Brechindex-Einstellmittel zu einer Veränderung des Brechungsindex der Kavität aufweisen. Insbesondere ist dabei die optische Dicke im Betrieb fortlaufend variierbar. Die Filtereinheit wird dabei in einem optischen Messsystem zur Bestimmung von Koordinaten von Punkten, insbesondere zur Entfernungsmessung, insbesondere geodätisches Vermessungsgerät, Koordinatenmessmaschine oder Scannvorrichtung, zur Extraktion elektromagnetischer Strahlung des definierten Wellenlängenbereichs nach dem Interferenzprinzip verwendet.

Ein weiterer Aspekt der Erfindung ist ein Messverfahren zum Bestimmen von Koordinaten von Punkten, insbesondere zum Entfernungsmessen, insbesondere mit geodätischem Vermessungsgerät, Koordinatenmessmaschine oder Scannvorrichtung, mit einem Emittieren elektromagnetischer Strahlung mit einer Emissionswellenlänge, einem Extrahieren elektromagnetischer Strahlung eines definierten Wellenlängenbereichs nach dem Interferenzprinzip und einem Erfassen der extrahierten Strahlung. Ferner erfolgt das Extrahieren der elektromagnetischen Strahlung anhand einer Filtereinheit, wobei die Filtereinheit wenigstens zwei mehrschichtig aufgebaute, zumindest teilreflektierende Spiegelelemente aufweist, wobei die Spiegelelemente im Wesentlichen parallel zueinander ausgerichtet sind und jeweils zwei benachbarte Spiegelelemente eine Kavität einschliessen und mit einem bestimmten Abstand zueinander angeordnet sind. Zudem ist durch einen Brechungsindex der Kavität und durch den Abstand zwischen den Spiegelelementen eine optische Dicke definiert. Die optische Dicke wird derart variiert, dass dadurch ein extrahierbarer Wellenlängenbereich der Filtereinheit so verändert wird, dass die Emissionswellenlänge innerhalb des extrahierbaren Wellenlängenbereichs liegt, insbesondere wobei ein Lageändern der Spiegelelemente und/oder ein Verändern des Brechungsindex erfolgt, insbesondere fortlaufend.

Das erfindungsgemässe System und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1a-b: jeweils eine Mittenwellenlängenabweichung zwischen einer Laserstrahlung und einem Filter;
- Fig. 2: eine spektrale Charakteristik eines Langpassfilters;
- Fig. 3a-b: einen Wellenlängendrift einer von einer Laserdiode emittierten Strahlung in Abhängigkeit von Temperatur bzw. Leistung;
- Fig. 4a-b: eine erste Ausführungsform eines abstimmbaren Interferenzfilters;
- Fig. 5: eine zweite Ausführungsform eines abstimmbaren Interferenzfilters mit Federn;
- Fig. 6: eine typische Transmissionkurve eines Fabry-Perot Interferenzfilters;
- Fig. 7: einen dielektrischen Schichtaufbau für Filter mit spektral spezifischem Verlauf;
- Fig. 8: eine Transmissionskurve eines abstimmbaren Interferenzfilters bei verschiedenen Steuerspannungen;
- Fig. 9a-b: jeweils eine erfindungsgemässe Anwendung eines abstimmbaren Interferenzfilters mit einer bzw. zwei Laserstrahlquellen;
- Fig. 10: einen erfindungsgemässen optischen Aufbau z.B. einer Vermessungsvorrichtung für Entfernungsmessung mit einem abstimmbaren Interferenzfilter;
- Fig. 11: eine weitere Ausführungsform eines erfindungsgemässen optischen Aufbaus z.B. einer Vermessungsvorrichtung für Entfernungsmessung und Richtungsmessung (ATR);
- Fig. 12: eine erfindungsgemässe Anwendung eines Interferenzfilters zur Baumaschinensteuerung.

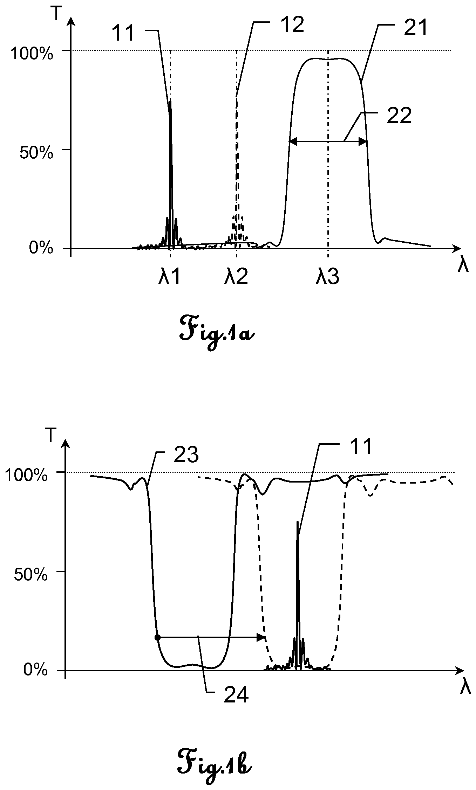

Figur 1a zeigt eine Mittenwellenlängenabweichung zwischen einer Laserstrahlung und einem spektral schmalbandigen Filter. Dabei stellen die Kurven 11, 12 jeweils eine Intensitätsverteilung einer emittierten Laserstrahlung dar. Trifft die Laserstrahlung auf das spektral schmalbandige Interferenzfilter auf, kann damit eine Transmission T von Strahlung einer bestimmten Wellenlänge erreicht werden. Der Wellenlängenbereich 22 (typischerweise mit einer vollen Halbwertsbreite (=FWHM) von 60nm, 10nm oder 1nm) ist definiert durch das mit der Kurve 21 dargestellte Transmissionsverhalten des Filters in Abhängigkeit der jeweiligen Wellenlänge, wobei eine Mittenwellenlänge A3 die Mitte des Bereichs 22 repräsentiert. Sowohl kommerzielle Laserdioden als auch schmalbandige Interferenzfilter weisen typische Mittenwellenlängenabweichungen von +/-5 bis +/-10nm auf. Die Kurve 11 zeigt beispielsweise das Emissionsspektrum einer Laserdiode bei 20°C, Kurve 12 dasjenige bei 50°C. Zudem zeigt das Filter einen Transmissionsverlauf mit zentraler Durchgangswellenlänge bei λ3. Die Emissionswellenlängen λ1,λ2 der jeweils dargestellten Strahlungen von Laserdiode treffen hier nicht den transmissiven Wellenlängenbereich 22 des als Bandpassfilters ausgebildeten Filters. In der vorliegenden Situation kann die Strahlung der Laserdioden somit nicht durch das Filter transmittieren und z.B. nicht zu einem im Folgenden angeordneten Detektor weitergeführt werden. Die Bandbreite für das Filtern der Laserstrahlung soll zudem möglichst eng ausgeprägt sein, um weitgehend Licht nur eines geeignet scharf definierten Wellenlängenbereichs, insbesondere einer Wellenlänge, zu filtern bzw. transmittieren zu lassen.

In Figur 1b ist das spektrale Verhalten 23 eines Notchfilters gezeigt. Wiederum liegt eine spektrale Abweichung zwischen der Laseremission 11 und einer Wirkungszone des Filters vor. Mit einem derartigen Filtertyp wird die Extraktion der Nutzstrahlung nicht mittels Transmission einer definierten Wellenlänge, sondern vielmehr durch Reflexion von Licht dieser Wellenlänge erreicht. Solche Notch- oder Stoppfilter können als spektral selektive Reflektoren verwendet werden, um ausschliesslich eine Nutzstrahlung auf einen Detektor zu führen. Mit dem Pfeil 24 ist eine derartige Verschiebung des Wirkungsbereichs des Filters angezeigt, die eine Reflexion der Laserstrahlung bewirken würde. Die Emissionswellenlänge der Laserstrahlung befindet sich nach dieser Verschiebung in dem Wellenlängenbereich, in dem das Notchfilter wirkt.

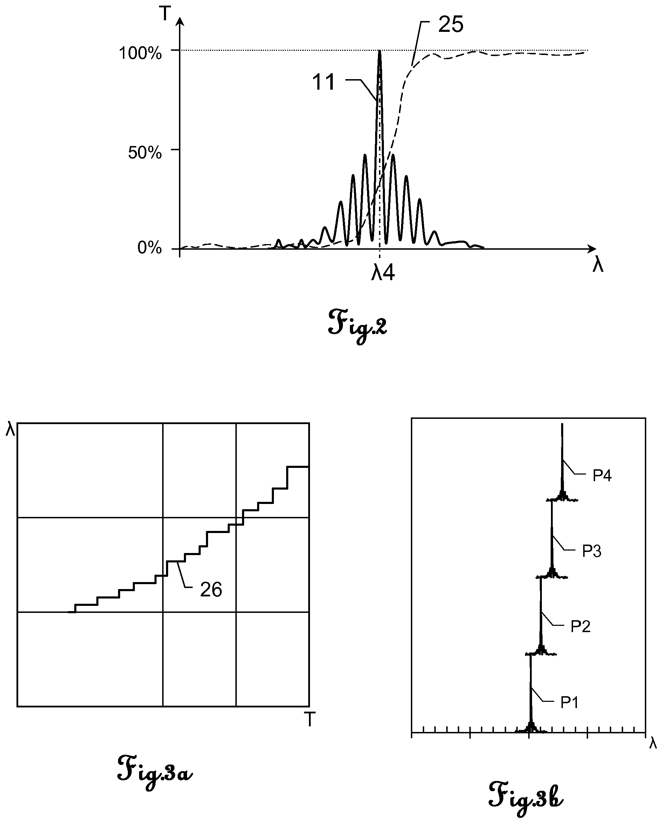

Figur 2 zeigt eine spektrale Charakteristik 25 eines Langpassfilters. Dieser Filtertyp beruht (ebenfalls, analog zu oben beschriebenen Filtertypen) auf dem Prinzip der Vielstrahl-Interferenz. Die Schichtstruktur von Langpass-, Kurzpass- oder Bandstopp-Filtern kann im wesentlichen aus einem dielektrischen Spiegel bestehen, im einfachsten Fall aus einer 2-Material-Struktur, beispielweise aus TiO2/SiO2 Schichten mit alternierenden, hohen und niedrigen Brechungsindizes identischer optischer Dicke. Im einfachsten Fall werden die optischen Dicken der Filmschichten gleich gross festgelegt, sodass die Phasenverschiebungen der Teilwellen beim passieren der Schicht π/2 betragen. Dieser Ansatz kann im Zusammenhang mit Brechungsindizes, Filmdicken und einer Designwellenlänge durch nH*lH=nL*lL= λo/4 ausgedrückt werden. Dabei steht λο für die Designwellenlänge, nH,nL für die Brechungsindizes der beiden Materialien und lH, lL für die jeweiligen Filmdicken. Ferner können H die optische Dicke einer λο/4-Schicht aus hoch brechendem und L die entsprechende λο/4-Schicht aus niedrig brechendem Material repräsentieren. Solche dielektrische Spiegel werden auch als Bragg-Reflektoren bezeichnet. Eine Verschiebung der Reflexionskurve kann dabei durch eine Veränderung der Schichtdicke oder des Brechungsindex wenigstens einer Schicht erfolgen. Werden simultan zwei oder mehr Schichtabstände variiert, so kann beispielsweise der Reflexionsbereich eines Notchfilters oder die spektrale Kante eines Kurz- oder Langpassfilters über einen grösseren Wellenlängenbereich verschoben werden, ohne dass sich die Filtercharakteristik stark ändert. Schichtfolgen von dielektrischen Filtern aus einer 2-Material-Struktur werden in der Regel mit der Abfolge der Schichtdicken angegeben. Ein Notchfilter mit der Designwellenlänge von λo=550nm, das sich mit zwei einstellbaren Schichtdicken verstellen lässt, kann beispielsweise folgendermassen dargestellt werden: [0.3lH, 1lL, 0.6lH, 10.5lL, (0.6lH, xlL)^2,0.6lH, 10.5lL, 0.3lH] Wird "x" z.B. von 9.8 auf 10.8 eingestellt, ändert sich die Mittenwellenlänge des Notchfilters kontinuierlich von 585nm auf 615nm.

Es besteht auch die Möglichkeit ein Langpassfilter mit einem Kurzpassfilter zu kombinieren, wodurch eine transmittive Extraktion von Strahlung eines bestimmten Wellenlängenbereichs erreicht werden kann. Durch die geeignete Kombination dieser beiden Filtertypen kann eine Filterung von Licht eines relativ engen Wellenlängenbereichs erreicht werden. Dabei wird eine Flanke der bandbegrenzten Filterwirkung durch das Langpassfilter und die andere Flanke durch das zweite zusätzliche Filter bewirkt. Gezeigt ist ausserdem ein Spektrum einer Laseremission 11, dessen Mittenwellenlänge λ4 leicht versetz ist zum maximalen Transmissionsvermögen des Filters.

Die Figuren 3a,3b zeigen jeweils einen Wellenlängendrift 26 einer von einer Laserdiode emittierten Strahlung in Abhängigkeit von Temperatur bzw. Leistung. Figur 3a zeigt dabei eine Kurve 26 für einen intrinsischen Temperaturdrift der Emissionswellenlänge einer Halbleiterlaserdiode. Bei Halbleitermaterialien wie GaAs oder InGaP kann die Wellenlänge der Laserdioden aufgrund der spektralen Varianz des internen Gainprofils z.B. um 0.3nm/°C driften. Zusätzlich kann die Mittenwellenlänge von Laserdioden in Abhängigkeit jeweiliger Produktionsbedingungen eines Fertigungsbatchs beispielsweise bis zu 0.8% variieren. Diese beiden Effekte ergeben den Nachteil, dass z.B. bei Geräten mit einem spezifizierten Temperaturbereich von - 30°C bis +70°C die Mittenwellenlänge des Laser um bis zu +/-20nm abweichen kann. Werden die Laserdioden zusätzlich mit gepulster Anregung betrieben so neigen sie zu mehrmodiger Emission mit einer Breite von bis zu 3nm. Um bei den bisherigen Vorrichtungen eine effiziente, hohe Transmission durch das Empfangsfilter zu erreichen, muss deshalb das Interferenzfilter eine breite Transmissionskurve aufweisen (FWHM bis 60nm, FWHM = Volle Breite bei halber Höhe). Ferner können Halbleiterlaserdioden auch einen schwachen Wellenlängendrift in Abhängigkeit des Vorwärtsstroms aufweisen. Mittels des Vorwärtsstroms kann die Laserleistung P eingestellt werden. Die Laserleistung kann beispielsweise bei der automatischen Zielausmessvorrichtung zur Signalanpassung genutzt werden, dort kann unter anderem die Bildhelligkeit des Zielobjekts (Reflektortarget) auf einem CMOS-Sensor gesteuert werden. In Figur 3b ist ein Drift der Emissionswellenlänge einer Halbleiterlaserdiode bei verschiedenen Leistungseinstellungen P1,P2,P3,P4 für die Diode dargestellt.

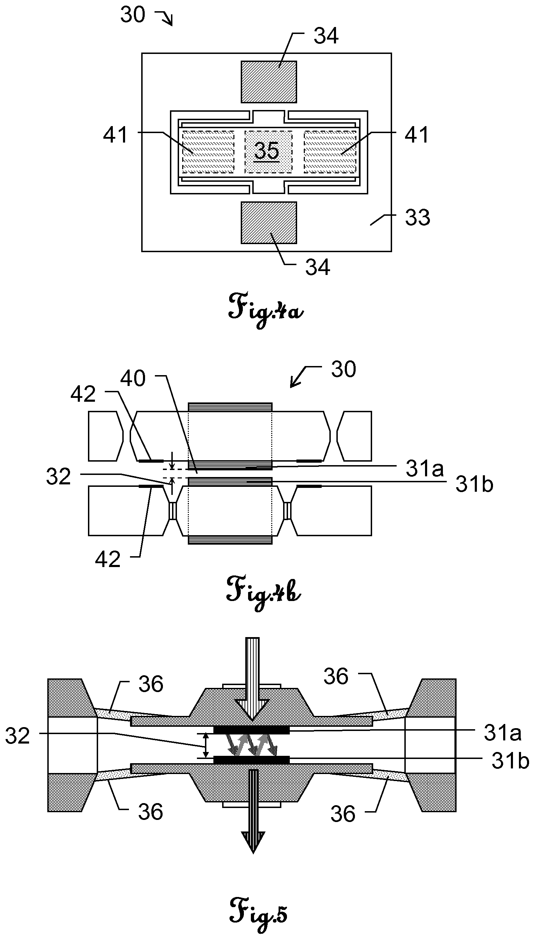

In den Figuren 4a und 4b ist eine erste Ausführungsform eines einfachen, abstimmbaren Interferenzfilters 30 schematisch dargestellt, wobei in Figur 4a eine Aufsicht und in Figur 4b ein Querschnitt des Filters gezeigt ist. Interferenzfilter 30 können als Fabry-Perot Interferometer aufgebaut sein, dabei handelt es sich um einen Aufbau aus zwei in einem optischen Bereich 35 angeordneten verlustarm reflektierenden Spiegeln 31a,31b, die in einem definierten Abstand 32 zueinander stehen. Um die Spiegel 31a,31b optisch verlustarm, also im Wesentlichen ohne Absorption zu realisieren können diese als aufgedampfte dielektrische Multilayer-Schichten ausgebildet sein. Im einfachsten Fall können die Spiegel aus Viertelwellenpaketen der Struktur (HL)^q, wobei q die Anzahl der Doppelschichten (HL) angibt, bestehen. Die Abkürzung H bedeutet die optische Dicke einer λο/4-Schicht aus hoch brechendem und L die entsprechende λο/4-Schicht aus niedrig brechendem Material. Mit einer phasenverschobenen Multilayerstruktur der Form [(HL)^q, x*Lₐᵢᵣ, (HL)^q], wobei die zwei Bragg-Spiegel (HL)^q durch eine Kavität voneinander separiert sind, kann ein sehr schmalbandiges Transmissionsfilter realisiert werden. Die Kavität kann dabei als Luftspalt 40 ausgebildet sein. Mit der Variation der Luftspaltbreite kann dabei die schmale Transmissionskurve spektral verschoben werden. Insbesondere kann die Kavität mit einem Medium, dessen Brechungsindex variierbar ist, versehen sein. In dieser Ausführung kann somit zudem eine Veränderung der Transmissionskurve durch eine Änderung des Brechungsindex des Mediums, beispielsweise durch Anlegen einer definierten Spannung, erreicht werden. Die Breite der Transmissionskurve (FWHM) wird durch die Anzahl q der Schichten (Layers) der beiden hochreflektierenden Spiegel festgelegt, wobei mit höherer Schichtzahl die FWHM-Breite abnimmt. Mit einer Wiederholung von mehreren Fabry-Perot Strukturen [(HL)^q, L, (HL)^q] und unterschiedlichen q-Werten kann die Transmissionskurve noch enger und insbesondere im Transmissionsbereich flacher eingestellt werden. Eine beispielhafte Doppelresonator-Struktur ist durch [(HL)^q, x1*Lₐᵢᵣ, (HL)^q] / (HL)^q, x2*Lₐᵢᵣ, (HL)^q] darstellbar. Bei einer solchen Struktur müssten zum Wellenlängenabgleich vorzugsweise beide Spacer x1 und x2 simultan variiert werden.

Das in den Figuren 4a und 4b dargestellte Verstell- und Spiegelelement bildet durch den Luftspalt 40 eine Kavität für ein einfaches Fabry-Perot Filter. Der Abstand 32 zwischen den beiden Spiegeln 31a,31b kann in definierter Weise verändert werden und dadurch die Mittenwellenlänge des Filters 30 zu kurzen oder langen Wellenlängen verschoben werden. Solche Interferenzfilter 30 können beispielsweise in MEMS-Technologie realisiert sein. Mit Mikromechanik ist ein Miniaturisierungsvorteil beim Vorrichtungsbau zusammen mit einer kostengünstigen Fertigung zugänglich. In den Verstell- und Spiegelelementen können heutzutage zudem die elektrisch durchstimmbaren Elemente 41,42 integriert sein. Als Trägermaterial 33 eignen sich z.B. Siliziumwafer mit optischer Qualität, dieses Material ist transmittiv für Wellenlängen grösser als 1200nm. Für Wellenlängen im sichtbaren oder nahen Infrarot sind Glaswafer (Fused Silica) oder Quarzplatten geeignet. Die Spiegelschichten 31a,31b sind mit einem definierten, spektralen Reflexionsvermögen auf diese Trägerplatten 33 aufgebracht, wobei der Luftspalt 40 bzw. ein bestimmtes optisches Medium zwischen den beiden Spiegeln 31a,31b die Hauptkavität bilden kann. Zudem sind Elektroden 34 zur Regelung oder Steuerung des Abstands 32 durch Beaufschlagung mit einem elektrischen Steuersignal bzw. durch Anlegen einer definierten Spannung auf dem Träger vorgesehen.

Die Resonanzwellenlängen AR eines Farby-Perot Resonators mit hoher Transmission befinden sich bei den Stellen λR=2*nc*d/m. Dabei ist "nc" der Brechungsindex des Spacer-Materials und "d" der Abstand 32 zwischen den beiden Multilayer-Spiegeln. Die Resonanzordnung "m" ist eine ganze Zahl ≥ 1. Mit wachsendem "m" können somit kurze Transmissionswellenlängen erreicht werden. Mit dem Ziel bei einem mikromechanischen Interferometer einen grossen Durchstimmbereich erzielen zu können, können insbesondere die erste oder eine niedrige Ordnung m gewählt werden. Ein solches Design kann dadurch für viele vermessungstechnische Anwendungen geeignet sein.

Ferner beträgt die volle Halbwertsbreite (FWHM) der Transmissionsmaxima FWHM=2*nc*d/m²/F, wobei "F" für die Finesse der Kavität steht. Durch technologisch bedingte Defekte sind die realen Transmissionsmaxima oft kleiner als 100%. Dies wird insbesondere durch Oberflächenfehler, welche bei der Verstellung oder Verschiebung der beweglichen Spiegel 31a,31b oder Platten auftreten, bedingt. Bei der Bewegung kann die parallele Ausrichtung zwischen den beiden Spiegel 31a,31b sich mit einem Keilfehler beaufschlagen, zudem können die Spiegelplatten bei grossen Auslenkungen über Federn 36 oder Flextures zunehmend verspannt werden, was zu Deformationen der Spiegel 31a,31b führen kann. Ausgehend von einer parallelen Ausrichtung der Spiegelelemente 31a,31b in einer Nullstellung sollen die beiden Spiegelelemente 31a,31b auch noch im Rahmen dieser Deformationen und/oder Keilfehler als im Wesentlichen parallel zueinander ausgerichtet verstanden werden. Eine zweite Ausführungsform eines abstimmbaren Interferenzfilters mit derartigen Federn 36 ist in Figur 5 gezeigt. So kann die effektive Finesse F der Kavität auf mittlere bis hohe Werte begrenzt werden. Insbesondere für vermessungstechnische Vorrichtungen wird eine Finesse mit einem Wert von grösser als 50 angestrebt.

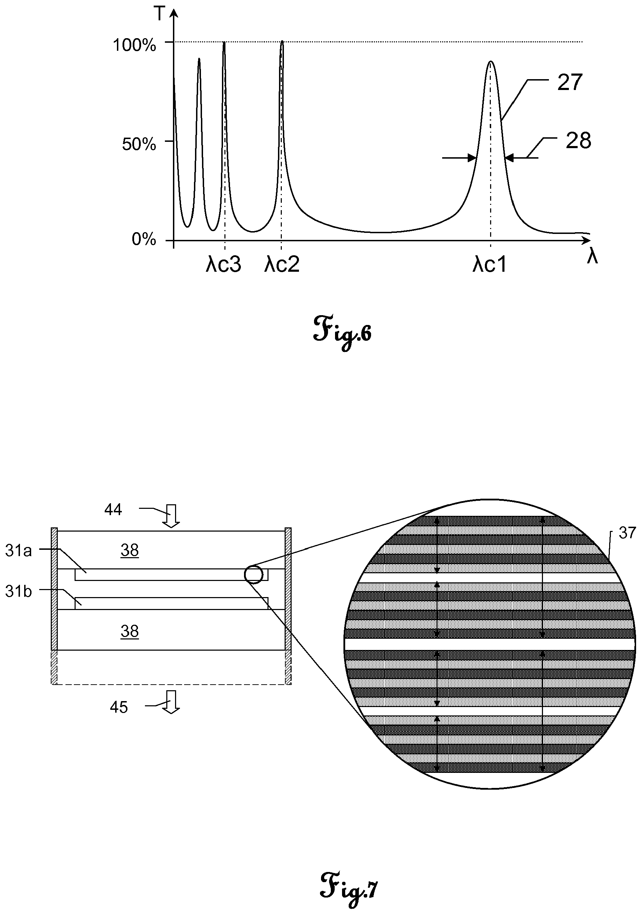

Figur 6 zeigt eine typische Transmissionkurve 27 eines Fabry-Perot Interferenzfilters, wobei die Transmission T des Filters in Abhängigkeit der Wellenlänge λ dargestellt ist. Die Transmissions-Peaks treten auf der Wellenlängenskala hierbei repetitiv (jeweils für die Wellenlängen λc1,λc2,λc3) auf und sind in Peaknähe in einer ersten Näherung lorentz-förmig. Für das Transmissionsmaximum um λc1 (erste Ordnung) ist zudem die volle Halbwertsbreite 28 (FWHM) dargestellt.

Figur 7 zeigt einen möglichen dielektrischen Schichtaufbau 37 für ein abstimmbares Filter mit spektral spezifischem Verlauf. Die beiden gegenüberliegenden Spiegelelemente 31a,31b - bestehend aus zwei Bragg-Reflektoren - sind jeweils an einem Substrat 38 angeordnet und ermöglichen durch den vergrössert dargestellten dielektrischen Schichtaufbau 37 zum einen eine verlustarme Filterung von einfallendem Licht 44, sodass nur Licht innerhalb eines definierten Wellenlängenbereichs aus dem Filter austritt 45. Zum zweiten erlaubt ein spezifisch angepasster Schichtaufbau 37 die Bestimmung des zu filternden bzw. extrahierenden Lichts.

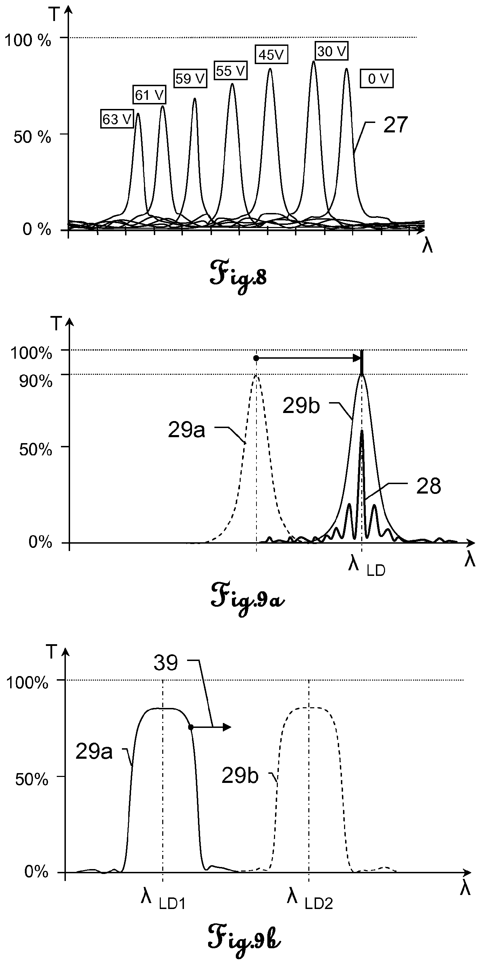

Figur 8 zeigt eine Transmissionskurve 27 eines abstimmbaren Interferenzfilters (MEMS) mit kapazitiven Aktuatoren nach dem Aufbau gemäss Figur 5 bei verschiedenen Steuerspannungen (0V-63V). In diesem Ausführungsbeispiel verschiebt sich das Transmissionsfenster mit der Zunahme der Steuerspannung zu kürzeren Wellenlängen, wobei dies aufgrund der Abnahme des Abstandes der Kavität zwischen den beiden Multilayer-Schichtfolgen erfolgt. Mit anwachsenden Spannungen kann somit die Transmission des Filters kleiner werden, z.B. deshalb weil bei grossen Verfahrwegen der Reflektorplatten Abweichungen von der Planarität und Parallelität (Keilfehler) auftreten können. Dadurch können sich die Finesse und damit die Transmission des Filters bzw. der beiden Spiegelflächen derart verändern, dass die Qualität der Filterung abnimmt und somit mehr Licht vom Filter absorbiert wird.

Die Figuren 9a,9b zeigen jeweils eine erfindungsgemässe Anwendung eines abstimmbaren Interferenzfilters mit einer bzw. zwei Laserstrahlquellen. In Figur 9a ist das Emissionsspektrum 28 einer Laserdiode mit einer Hauptemissionswellenlänge λLD gezeigt. Ferner ist ein Filterspektrum 29a eines abstimmbaren Interferenzfilters dargestellt, wobei eine Interferenzwellenlänge des Filters durch Anlegen eines definierten elektrischen Steuersignals (Spannung) einstellbar ist. Um nun die von der Laserdiode emittierte Strahlung möglichst eng und effizient filtern oder extrahieren zu können, kann die an dem Filter anliegende Spannung derart verändert werden, dass ein durch die Filtereigenschaften definierter Transmissionspeak im Wesentlichen das Spektrum 28 der Diode einschliesst. Durch das Anlegen der Spannung kann der Peak so verschoben werden, dass die Mittenwellenlänge des Filterspektrums 29b Interferenzfilters mit der Emissionswellenlänge λLD möglichst übereinstimmt und somit eine optimale Filterung bzw. Transmission erreicht werden kann.

In Figur 9b sind jeweils die Emissionswellenlängen λLD1 und λLD2 zweier Laserdioden und ein Interferenzspektrum 29a eines Filters gezeigt. Das Verschieben 39 des Interferenzspektrums 29a derart, dass jeweils entweder Licht der Wellenlänge λLD1 oder der Wellenlänge λLD2 gefiltert wird, kann hierbei wiederum mittels Anlegen bzw. Verändern einer Spannung und einer damit erfolgenden Veränderung des Abstand zwischen den Spiegelelementen des Filters und/oder Veränderung des Brechungsindex der Kavität erfolgen. Eine derartige Anwendung des Filters kann beispielsweise bei der Verwendung von zwei unterschiedlichen Laserquellen zusammen mit einem gemeinsamen Empfänger geeignet sein. Das Interferenzspektrum 29a,29b kann dann in Abhängigkeit der zu messenden Laserstrahlung auf die jeweilige Laserwellenlänge λLD1,λLD2 eingestellt werden. Somit kann die Anordnung eines abstimmbaren Interferenzfilters in einem von zwei Strahlquellen gemeinsam genutzten Strahlengang sowohl für die effektive Filterung der ersten als auch für die Filterung der zweiten Strahlung verwendet werden und demnach einen geringen konstruktiven und finanziellen Aufwand hinsichtlich der Produktion eines optischen Bauteils bedeuten.

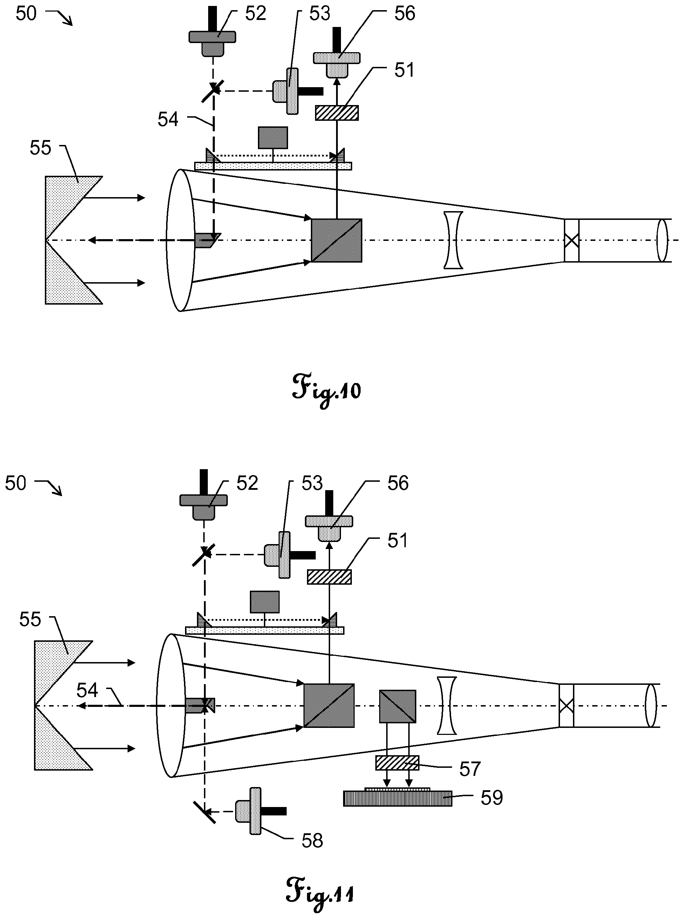

Figur 10 zeigt einen erfindungsgemässen optischen Aufbau 50 z.B. einer Vermessungsvorrichtung, insbesondere eines Theodoliten, einer Totalstation oder eines Laserscanners, für Entfernungsmessung mit einem abstimmbaren Interferenzfilter 51. In der Vorrichtung sind weiters zwei Laserdioden 52,53 als Strahlquellen angeordnet, welche jeweils eine charakteristische Laserstrahlung emittieren und einen gemeinsamen Strahlengang 54 nutzen (die emittierten Strahlungen können sich dabei wesentlich hinsichtlich ihrer Wellenlängen unterscheiden). Das Licht wird über Spiegel-, Fokussier- und/oder Aufweitungsoptiken auf ein Objekt 55, insbesondere einen Reflektor, geführt und vom Objekt 55 reflektiert. Das reflektierte Licht wird wiederum mit dem optischen Aufbau 50 erfasst und auf einen Detektor 56, der zur Detektion von sowohl der Strahlung der ersten als auch der zweiten Laserdiode 52,53 ausgebildet ist, geführt. Zudem ist dem Detektor 56 das abstimmbare Interferenzfilter 51 vorgelagert, wobei das Filter 51 gemäss einer der Figuren 4a,4b,5 ausgeführt sein kann. Die mit dem Filter 51 zu extrahierende Strahlung kann durch ein individuelles Anpassen des Interferenzspektrums (gemäss Figur 9b) des Filters 51 eingestellt werden. Dabei kann beispielsweise jeweils eine Wellenlänge für jede Diode 52,53 bei definierten Bedingungen (z.B. Temperatur, Strom) bekannt und im System hinterlegt sein. Ausgehend davon kann das Filter einen bestimmten Wellenlängenbereich um diese bekannten Laserwellenlängen durchfahren und gleichzeitig mittels des Detektors 56 eine empfangene Intensität gemessen werden und somit eine geeignete Einstellung für einen Messvorgang gefunden werden. Insbesondere kann von den emittierten Strahlungen jeweils ein Referenzstrahl ausgekoppelt werden und die Wellenlänge dieses Strahls fortlaufend mittels eines weiteren Detektors gemessen werden. Das Filter 51 kann dann in Abhängigkeit der jeweils gemessenen Wellenlänge eingestellt werden. Hierzu kann z.B. eine Zuordnungstabelle vorgesehen sein, die einen Zusammenhang zwischen der mit dem Filter 51 extrahierbaren Wellenlänge und der am Filter 51 hierfür anzulegenden Spannung (bzw. dem Abstand zwischen den Spiegelelementen und dem Brechungsindex) herstellt. Ausserdem kann, insbesondere fortlaufend, die Temperatur der Laseremitter 52,53 und der anliegende Strom bestimmt werden und mittels einer gespeicherten Zuordnungsfunktion oder -tabelle) das Filter 51 derart angepasst werden, dass die jeweils emittierte Strahlung in geeigneter Weise gefiltert wird.

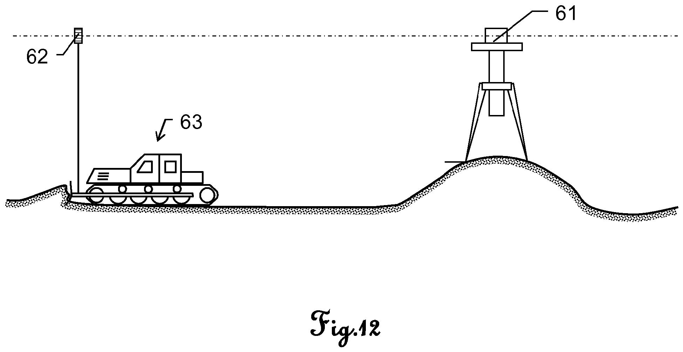

Figur 11 zeigt eine weitere Ausführungsform eines erfindungsgemässen optischen Aufbaus 50 insbesondere einer Vermessungsvorrichtung für Entfernungsmessung und automatisierter Richtungsmessung (ATR) mit drei Laserquellen 52,53,58 und zwei Detektoren 56,59, wobei der Detektor 59 als PSD,CCD oder CMOS ausgebildet sein kann und zur automatischen Zielverfolgung verwendet werden kann. Die mit den Lasern 52,53,58 emittierten Strahlungen können sich wellenlängenmässig unterscheiden und werden derart geführt, dass ein gemeinsamer Strahlengang 54 für diese verwendet wird und die Laserstrahlen jeweils an einem Objekt 55 reflektiert werden. Vor die beiden Detektoren 56,59 sind wiederum jeweils abstimmbare Interferenzfilter 51,57 vorgeschaltet, um einfallendes, störendes Umgebungslicht herauszufiltern und am Auftreffen auf den Detektoren 56,59 zu hindern. Aufgrund des Driftverhaltens der Laserdioden 52,53,58 können die jeweils zu filternden Wellenlängen durch ein Abstimmen des Abstandes der Spiegelflächen in den Filtern eingestellt werden. Dieses Einstellen kann z.B. hinsichtlich zweier mit einem Filter zu extrahierenden Wellenlängen gemäss Figur 9b oder allein aufgrund des Wellenlängendrifts gemäss Figur 9a erfolgen. Figur 12 zeigt eine erfindungsgemässe Anwendung eines einstellbaren Interferenzfilters zur Baumaschinensteuerung. Dabei ist ein Laseremitter 61 im Gelände positioniert und an einer Baumaschine 63 ein Empfänger 62 für den Empfang der durch den Emitter 61 emittierten Strahlung vorgesehen. Der Empfänger 62 verfügt über ein abstimmbares Interferenzfilter. Somit kann beispielsweise der Empfänger 62 einem Drift der emittierten Strahlung, insbesondere temperaturbedingt, durch ein fortlaufendes Regeln des Interferenzspektrums angepasst werden und ein Abhalten von Umgebungsstrahlung verlässlich realisiert werden.

Es versteht sich, dass diese dargestellten Figuren nur mögliche Ausführungsbeispiele schematisch darstellen. Die verschiedenen Ansätze können erfindungsgemäss ebenso miteinander sowie mit Verfahren und Vorrichtungen zur Entfernungsmessung und mit Messgeräten des Stands der Technik kombiniert werden.

## Patentansprüche

1. Optisches Messsystem zur Bestimmung von Koordinaten von Punkten, insbesondere zur Entfernungsmessung, insbesondere geodätisches Vermessungsgerät, Koordinatenmessmaschine oder Scannvorrichtung, mit
• einer Strahlungsquelle (52,53,58) zur Emission elektromagnetischer Strahlung mit einer Emissionswellenlänge (λ1,λ2,λ4,λLD,λLD1,λLD2) und
• einer Empfangseinheit mit
□ einer Filtereinheit (51,57) zur Extraktion elektromagnetischer Strahlung eines definierten Wellenlängenbereichs (22) nach dem Interferenzprinzip und
□ einem derart angeordneten Detektor (56,59), dass die mittels der Filtereinheit (51,57) extrahierbare Strahlung mit dem Detektor (56,59) erfassbar ist,
**dadurch gekennzeichnet, dass**
die Filtereinheit (51,57) aufweist
• wenigstens zwei mehrschichtig aufgebaute, zumindest teilreflektierende Spiegelelemente (31a,31b), wobei die Spiegelelemente (31a,31b) im Wesentlichen parallel zueinander ausgerichtet sind und jeweils zwei benachbarte Spiegelelemente (31a,31b) eine Kavität (40) einschliessen und mit einem bestimmten Abstand (32) zueinander angeordnet sind, wobei die Kavität als Luftspalt ausgebildet ist oder ein Gas, eine Flüssigkeit oder ein elektroaktives Polymer als optisch veränderbares Medium mit einem Materialbrechungsindex aufweist und durch einen Brechungsindex der Kavität (40) und durch den Abstand (32) zwischen den Spiegelelementen (31a,31b) eine optische Dicke definiert ist, und
• Optische-Dicke-Veränderungsmittel zur Variation der optischen Dicke, sodass ein extrahierbarer Wellenlängenbereich (22) der Filtereinheit (51,57) verändert wird, wobei die Optische-Dicke-Veränderungsmittel Stellmittel zu einer Lageveränderung (32) der Spiegelelemente (31a,31b) zur Variation der optischen Dicke mittels Variation des Abstands der Spiegelelemente (31a,31b) zueinander und/oder Brechindex-Einstellmittel zur Variation der optischen Dicke mittels einer Veränderung des Brechungsindex der Kavität (40) aufweisen, wobei das Messsystem eine Regelungseinheit aufweist, welche derart mit den Optische-Dicke-Veränderungsmitteln und dem Detektor (56,59) zusammenwirkt, dass die optische Dicke so variierbar ist, insbesondere automatisch, dass die Emissionswellenlänge (λ1,λ2,λ4,λLD,λLD1,λLD2) der emittierten Strahlung innerhalb des extrahierbaren Wellenlängenbereichs (22) liegt und
dass die optische Dicke in Abhängigkeit einer Detektion des Detektors (56,59) einstellbar ist,
und ein Teil der von der Strahlquelle (52,53,58) emittierten elektromagnetischen Strahlung mit einem Strahlauskoppelelement als Referenzstrahl auskoppelbar und eine Referenzwellenlänge mit einem Sensor messbar sind und die optische Dicke in Abhängigkeit der gemessenen Referenzwellenlänge derart einstellbar ist, dass die Referenzwellenlänge im extrahierten Wellenlängenbereich (22) liegt.

2. Optisches Messsystem nach Anspruch 1,
**dadurch gekennzeichnet, dass**
die optische Dicke mittels der Optische-Dicke-Veränderungsmittel derart einstellbar ist, dass ein mittels des Detektors (56,59) erfasster Messwert einen definierten Schwellwert überschreitet.

3. Optisches Messsystem nach einem der Ansprüche 1 bis 2,
**dadurch gekennzeichnet, dass**
der extrahierbare Wellenlängenbereich (22) definiert ist durch eine ein Extraktionsmaximum repräsentierende Mittenwellenlänge (λ3) und einen in Abhängigkeit eines Extraktionsniveau-Wellenlängen-Verlaufs definierten Toleranzbereich um die Mittenwellenlänge (λ3).

4. Optisches Messsystem nach einem der Ansprüche 1 bis 3,
**dadurch gekennzeichnet, dass**
die Filtereinheit (51,57) derart ausgebildet ist, dass eine Reflexion oder Transmission von elektromagnetischer Strahlung innerhalb des extrahierbaren Wellenlängenbereichs (22) erfolgt.

5. Optisches Messsystem nach einem der Ansprüche 1 bis 4,
**dadurch gekennzeichnet, dass**
aus der mittels der Optische-Dicke-Veränderungsmittel durchführbaren Variation der optischen Dicke eine Extraktionswellenlänge für die extrahierte Strahlung ableitbar ist, insbesondere mittels einer Messung mit dem Detektor (56,59).

6. Optisches Messsystem nach einem der Ansprüche 1 bis 5,
**dadurch gekennzeichnet, dass**
der Detektor (56,59) als Photodiode, CMOS- oder PSD-Flächensensor ausgebildet ist.

7. Optisches Messsystem nach einem der Ansprüche 1 bis 6,
**dadurch gekennzeichnet, dass**
das Messsystem zumindest eine weitere Strahlquelle mit einer weiteren Emissionswellenlänge aufweist.

8. Optisches Messsystem nach einem der Ansprüche 1 bis 7,
**dadurch gekennzeichnet, dass**
die optische Dicke mittels Beaufschlagung der Optische-Dicke-Veränderungsmittel mit einem elektrischen Steuersignal einstellbar ist, wobei die optische Dicke in Abhängigkeit von einem beaufschlagten Steuersignalwert einstellbar ist.

9. Optisches Messsystem nach einem der Ansprüche 1 bis 8,
**dadurch gekennzeichnet, dass**
bei Vorliegen einer Kavität (40) mit einem optisch veränderbares Medium mit einem Materialbrechungsindex das Medium durch ein elektroaktives Polymer verkörpert wird und der Materialbrechungsindex mittels des elektronischen Steuersignals definiert veränderbar ist, sodass die optische Dicke verändert wird.

10. Optisches Messsystem nach einem der Ansprüche 1 bis 9,
**dadurch gekennzeichnet, dass**
das System eine Datenbank aufweist, in der eine Zuordnungstabelle mit Abständen (32) der Spiegelelemente (31a,31b) und jeweiligen Wellenlängenbereichen (22) gespeichert ist, insbesondere wobei die jeweiligen Wellenlängenbereiche (22) in Abhängigkeit von Brechungsindizes der Kavität (40) gespeichert sind, wobei der Abstand (32) zwischen den Spiegelelementen (31a,31b) und/oder der Brechungsindex der Kavität (40) in Abhängigkeit einer definierten zu extrahierenden Wellenlänge (22) mittels der Zuordnungstabelle einstellbar ist.

11. Optisches Messsystem nach Anspruch 10,
**dadurch gekennzeichnet, dass**
in der Datenbank eine Parametrisierung für die Strahlquelle (52,53,58) zur Bestimmung der Emissionswellenlänge (λ1,λ2,λ4,λLD,λLD1,λLD2) gespeichert ist und der Abstand (32) zwischen den Spiegelelementen (31a,31b) und/oder der Brechungsindex der Kavität (40) in Abhängigkeit von Parametern der Parametrisierung einstellbar ist, insbesondere eine Abhängigkeit der
Emissionswellenlänge (λ1,λ2,λ4,λLD,λLD1,λLD2) von Strom und/oder Temperatur der Strahlquelle (52,53,58) repräsentierende Parametrisierung.

12. Verwendung einer Filtereinheit (51,57)
• mit wenigstens zwei mehrschichtig aufgebauten, zumindest teilreflektierenden Spiegelelementen (31a,31b), wobei die Spiegelelemente (31a,31b) im Wesentlichen parallel zueinander ausgerichtet sind und jeweils zwei benachbarte Spiegelelemente (31a,31b) eine Kavität (40) einschliessen und mit einem bestimmten Abstand (32) zueinander angeordnet sind, wobei die Kavität als Luftspalt ausgebildet ist oder ein Gas, eine Flüssigkeit und/oder ein elektroaktives Polymer als optisch veränderbares Medium mit einem Materialbrechungsindex aufweist und durch einen Brechungsindex der Kavität (40) und durch den Abstand (32) zwischen den Spiegelelementen (31a,31b) eine optischen Dicke definiert ist, und
• mit Optische-Dicke-Veränderungsmitteln zur Variation der optischen Dicke, sodass ein extrahierbarer Wellenlängenbereich (22) der Filtereinheit (51,57) verändert wird, wobei die Optische-Dicke-Veränderungsmittel Stellmittel zu einer Lageveränderung (32) der Spiegelelemente (31a,31b) zur Variation der optischen Dicke mittels Variation des Abstands der Spiegelelemente (31a,31b) zueinander und/oder Brechindex-Einstellmittel zur Variation der optischen Dicke mittels einer Veränderung des Brechungsindex der Kavität (40) aufweisen in einem optischen Messsystem zur Bestimmung von Koordinaten von Punkten, insbesondere zur Entfernungsmessung, insbesondere geodätisches Vermessungsgerät, Koordinatenmessmaschine oder Scannvorrichtung, zur Extraktion elektromagnetischer Strahlung des definierten Wellenlängenbereichs (22) nach dem Interferenzprinzip,
wobei das Messsystem einen derart angeordneten Detektor (56,59) aufweist, dass die mittels der Filtereinheit (51,57) extrahierbare Strahlung mit dem Detektor (56,59) erfassbar ist und eine Regelungseinheit aufweist, welche derart mit den Optische-Dicke-Veränderungsmitteln und dem Detektor (56, 59) zusammenwirkt, dass die optische Dicke so variierbar ist, insbesondere automatisch, dass die Emissionswellenlänge (λ1,λ2,λ4,λLD,λLD1,λLD2) der emittierten Strahlung innerhalb des extrahierbaren Wellenlängenbereichs (22) liegt und dass die optische Dicke in Abhängigkeit einer Detektion des Detektors (56,59) einstellbar ist und
wobei ein Teil der von der Strahlquelle (52,53,58) emittierten elektromagnetischen Strahlung mit einem Strahlauskoppelelement als Referenzstrahl auskoppelbar und eine Referenzwellenlänge mit einem Sensor messbar sind und die optische Dicke in Abhängigkeit der gemessenen Referenzwellenlänge derart einstellbar ist, dass die Referenzwellenlänge im extrahierten Wellenlängenbereich (22) liegt.

13. Messverfahren zum Bestimmen von Koordinaten von Punkten, insbesondere zum Entfernungsmessen, insbesondere mit geodätischem Vermessungsgerät, Koordinatenmessmaschine oder Scannvorrichtung, mit
• einem Emittieren elektromagnetischer Strahlung mit einer Emissionswellenlänge (λ1,λ2,λ4,λLD,λLD1,λLD2),
• einem Extrahieren elektromagnetischer Strahlung eines definierten Wellenlängenbereichs (22) nach dem Interferenzprinzip und
• einem Erfassen der extrahierten Strahlung mit einem Detektor (56, 59), **dadurch gekennzeichnet, dass**
das Extrahieren der elektromagnetischen Strahlung anhand einer Filtereinheit (51,57) erfolgt, wobei
• die Filtereinheit (51,57) wenigstens zwei mehrschichtig aufgebaute, zumindest teilreflektierende Spiegelelemente (31a,31b) aufweist, wobei die Spiegelelemente (31a,31b) im Wesentlichen parallel zueinander ausgerichtet sind und jeweils zwei benachbarte Spiegelelemente (31a,31b) eine Kavität (40) einschliessen und mit einem bestimmten Abstand (32) zueinander angeordnet sind und wobei die Kavität als Luftspalt ausgebildet ist oder ein Gas, eine Flüssigkeit und/oder ein elektroaktives Polymer als optisch veränderbares Medium mit einem Materialbrechungsindex aufweist und durch einen Brechungsindex der Kavität (40) und durch den Abstand (32) zwischen den Spiegelelementen (31a,31b) eine optische Dicke definiert ist, und
• die optische Dicke variiert wird, sodass dadurch ein extrahierbarer Wellenlängenbereich (22) der Filtereinheit (51,57) so verändert wird, dass die Emissionswellenlänge innerhalb des extrahierbaren Wellenlängenbereichs (22) liegt, wobei ein Lageändern der Spiegelelemente (31a,31b) zur Variation der optischen Dicke mittels Variation des Abstands der Spiegelelemente (31a, 31b) zueinander und/oder ein Verändern des Brechungsindex zur Variation der optischen Dicke erfolgt,
• wobei mittels einer mit Optische-Dicke-Veränderungsmitteln und dem Detektor (56, 59) zusammenwirkenden Regelungseinheit die optische Dicke so variierbar ist, insbesondere automatisch, dass die Emissionswellenlänge (λ1,λ2,λ4,λLD,λLD1,λLD2) der emittierten Strahlung innerhalb des extrahierbaren Wellenlängenbereichs (22) liegt und dass die optische Dicke in Abhängigkeit einer Detektion des Detektors (56,59) einstellbar ist und
• wobei ein Teil der emittierten elektromagnetischen Strahlung mit einem Strahlauskoppelelement als Referenzstrahl auskoppelbar und eine Referenzwellenlänge mit einem Sensor messbar sind und die optische Dicke in Abhängigkeit der gemessenen Referenzwellenlänge derart einstellbar ist, dass die Referenzwellenlänge im extrahierten Wellenlängenbereich (22) liegt.

## Claims

1. An optical measuring system for determining coordinates of points, more particularly for distance measurement, more particularly a geodetic surveying apparatus, coordinate measuring machine or scanning device, comprising
• a radiation source (52,53,58) for emitting electromagnetic radiation having an emission wavelength (λ1,λ2,λ4,λLD,λLD1,λLD2), and
• a receiving unit having
□ a filter unit (51,57) for extracting electromagnetic radiation in a defined wavelength range (22) according to the interference principle, and
□ a detector (56,59) arranged in such a way that the radiation that can be extracted by means of the filter unit (51,57) is detectable by the detector (56,59),
**characterized in that**
the filter unit (51,57) comprises
• at least two mirror elements (31a,31b) which are at least partly reflective and which are constructed in a multilayered fashion, wherein the mirror elements (31a,31b) are oriented substantially parallel to one another and two adjacent mirror elements (31a,31b) in each case enclose a cavity (40) and are arranged at a specific distance (32) with respect to one another, wherein the cavitiy is embodied as a an air gap or comprises a gaz, a liquid or an electroactive polymer as optically variable medium with a material refractive index and optical thickness is defined by a refractive index of the cavity (40) and by the distance (32) between the mirror elements (31a,31b), and
• optical thickness varying means for varying the optical thickness, such that an extractable wavelength range (22) of the filter unit (51,57) is varied, wherein the optical thickness varying means have actuating means for varying (32) the position of the mirror elements (31a,31b) for varying the of the optical thickness by variation of the distance of the mirror elements (31a,31b) with respect to one another and/or refractive index adjusting means for varying the optical thickness by variation of the refractive index of the cavity (40), whereby
the measuring system comprises a regulating unit, wherein the regulating unit interacts with the optical thickness varying means and the detector (56, 59) in such a way that the optical thickness is variable, in particular automatically, such that the emission wavelength (λ1,λ2,λ4,λLD,λLD1,λLD2) of the emitted radiation lies within the extractable wavelength range (22) and the optical thickness is adjustable depending on a detection of the detector (56,59) and
part of the electromagnetic radiation emitted by the radiation source (52,53,58) can be coupled out as reference beam by a beam coupling-out element and a reference wavelength is measurable by a sensor and the optical thickness is adjustable depending on the measured reference wavelength in such a way that the reference wavelength lies in the extracted wavelength range (22).

2. The optical measuring system as claimed in any one of claims 1,
**characterized in that**
the optical thickness is adjustable by means of the optical thickness varying means in such a way that a measured value detected by means of the detector (56,59) exceeds a defined threshold value.

3. The optical measuring system as claimed in any one of claims 1 to 2,
**characterized in that**
the extractable wavelength range (22) is defined by a center wavelength (λ3) representing an extraction maximum, and a tolerance range around the center wavelength (λ3) defined depending on an extraction level-wavelength profile.

4. The optical measuring system as claimed in any one of claims 1 to 3,
**characterized in that**
the filter unit (51,57) is designed in such a way that reflection or transmission of electromagnetic radiation within the extractable wavelength range (22) is effected.

5. The optical measuring system as claimed in any one of claims 1 to 4,
**characterized in that**
an extraction wavelength for the extracted radiation is derivable from the variation of the optical thickness that can be carried out by means of the optical thickness varying means, more particularly by means of a measurement by the detector (56,59).

6. The optical measuring system as claimed in any one of claims 1 to 5,
**characterized in that**
the detector (56,59) is designed as a photodiode, CMOS or PSD area sensor.

7. The optical measuring system as claimed in any one of claims 1 to 6,
**characterized in that**
the measuring system comprises at least one further radiation source having a further emission wavelength.

8. The optical measuring system as claimed in any one of claims 1 to 7,
**characterized in that**
the optical thickness is adjustable by means of an electrical control signal being applied to the optical thickness varying means, wherein the optical thickness is adjustable depending on an applied control signal value.

9. The optical measuring system as claimed in any one of claims 1 to 8,
**characterized in that**
in presence of a cavity (40) with an optically variable medium having a material refractive index, the medium is embodied by an electroactive polymer and the material refractive index is variable in a defined manner by means of the electronic control signal such that the optical thickness is varied.

10. The optical measuring system as claimed in any one of claims 1 to 9,
**characterized in that**
the system comprises a database in which an assignment table having distances (32) between the mirror elements (31a,31b) and respective wavelength ranges (22) is stored, more particularly wherein the respective wavelength ranges (22) depending on refractive indices of the cavity (40) are stored, wherein the distance (32) between the mirror elements (31a,31b) and/or the refractive index of the cavity (40) are/is adjustable depending on a defined wavelength (22) to be extracted by means of the assignment table.

11. The optical measuring system as claimed in claim 10,
**characterized in that**
in the database a parameterization for the radiation source (52,53,58) for determining the emission wavelength (λ1,λ2,λ4,λLD,λLD1,λLD2) is stored and the distance (32) between the mirror elements (31a,31b) and/or the refractive index of the cavity (40) are/is adjustable depending on parameters of the parameterization, more particularly a parameterization representing a dependence of the emission wavelength (λ1,λ2,λ4, λLD,λLD1,λLD2) on current and/or temperature of the radiation source (52,53,58).

12. The use of a filter unit (51,57)
• comprising at least two mirror elements (31a,31b) which are at least partly reflective and which are constructed in a multilayered fashion, wherein the mirror elements (31a,31b) are oriented substantially parallel to one another and two adjacent mirror elements (31a,31b) in each case enclose a cavity (40) and are arranged at a specific distance (32) with respect to one another, wherein the cavitiy is embodied as an air gap or comprises a gaz, a liquid or an electroactive polymer as optically variable medium with a material refractive index and optical thickness is defined by a refractive index of the cavity (40) and by the distance (32) between the mirror elements (31a,31b), and
• comprising optical thickness varying means for varying the optical thickness, such that an extractable wavelength range (22) of the filter unit (51,57) is varied, more particularly wherein the optical thickness varying means have actuating means for varying (32) the position of the mirror elements (31a,31b) for varying the of the optical thickness by variation of the distance of the mirror elements (31a,31b) with respect to one another and/or refractive index adjusting means for varying the optical thickness by variation of the refractive index of the cavity (40),
in an optical measuring system for determining coordinates of points, more particularly for distance measurement, more particularly a geodetic surveying apparatus, coordinate measuring machine or scanning device, for extracting electromagnetic radiation in the defined wavelength range (22) according to the interference principle,
whereby the measuring system comprises a detector (56, 59) arranged in such a way that radiation extractable by means of the filter unit (51,57) is detectable and comprises a regulation unit, wherein the regulating unit interacts with the optical thickness varying means and the detector (56, 59) in such a way that the optical thickness is variable, in particular automatically, such that the emission wavelength (λ1,λ2,λ4,λLD,λLD1,λLD2) of the emitted radiation lies within the extractable wavelength range (22) and the optical thickness is adjustable depending on a detection of the detector (56,59) and
part of the electromagnetic radiation emitted by the radiation source (52,53,58) can be coupled out as reference beam by a beam coupling-out element and a reference wavelength is measurable by a sensor and the optical thickness is adjustable depending on the measured reference wavelength in such a way that the reference wavelength lies in the extracted wavelength range (22).

13. A measuring method for determining coordinates of points, more particularly for distance measurement, more particularly by means of a geodetic surveying apparatus, coordinate measuring machine or scanning device, comprising
• emitting electromagnetic radiation having an emission wavelength (λ1,λ2,λ4,λLD,λLD1,λLD2),
• extracting electromagnetic radiation in a defined wavelength range (22) according to the interference principle, and
• detecting the extracted radiation with a detector (56,59),
**characterized in that**
extracting the electromagnetic radiation is effected with the aid of a filter unit (51,57), wherein
• the filter unit (51,57) comprises at least two mirror elements (31a,31b) which are at least partly reflective and which are constructed in a multilayered fashion, wherein the mirror elements (31a,31b) are oriented substantially parallel to one another and two adjacent mirror elements (31a,31b) in each case enclose a cavity (40) and are arranged at a specific distance (32) with respect to one another, wherein the cavitiy is embodied as an air gap or comprises a gaz, a liquid or an electroactive polymer as optically variable medium with a material refractive index and an optical thickness is defined by a refractive index of the cavity (40) and by the distance (32) between the mirror elements (31a,31b), and
• the optical thickness is varied such that as a result an extractable wavelength range (22) of the filter unit (51,57) is varied such that the emission wavelength lies within the extractable wavelength range (22), wherein changing the position of the mirror elements (31a,31b) for varying the of the optical thickness by variation of the distance of the mirror elements (31a,31b) with respect to one another and/or varying the refractive index for variation of the optical thickness are/is effected,
whereby by means of a regulating unit interacting with optical thickness varying means and the detector (56,59) the optical thickness is varied such, in particular automatically, that the the emission wavelength (λ1,λ2,λ4,λLD,λLD1,λLD2) of the emitted radiation lies within the extractable wavelength range (22) and the optical thickness is adjustable depending on a detection of the detector (56,59) and
part of the electromagnetic radiation emitted by the radiation source (52,53,58) can be coupled out as reference beam by a beam coupling-out element and a reference wavelength is measurable by a sensor and the optical thickness is adjustable depending on the measured reference wavelength in such a way that the reference wavelength lies in the extracted wavelength range (22).

## Revendications

1. Système de mesure optique pour déterminer les coordonnées de points, en particulier pour la mesure de distances, en particulier appareil de mesure géodésique, machine de mesure de coordonnées ou dispositif de balayage, comportant
• une source de rayonnement (52, 53, 58) pour émettre un rayonnement électromagnétique ayant une longueur d'onde d'émission (λ1, λ2, λ4, λLD, λLD1, λLD2) et
• une unité de réception comportant
∘ une unité de filtrage (51, 57) pour extraire le rayonnement électromagnétique d'une plage de longueurs d'onde définie (22) selon le principe de l'interférence et
∘ un détecteur (56, 59) disposé de telle sorte que le rayonnement extractible au moyen de l'unité de filtrage (51, 57) puisse être détecté par le détecteur (56, 59),
**caractérisé en ce**
**que** l'unité de filtrage (51, 57) présente
• au moins deux éléments miroirs (31a, 31b) à structure multicouche et au moins partiellement réfléchissants, les éléments miroirs (31a, 31b) étant orientés sensiblement parallèlement l'un à l'autre et chaque fois deux éléments miroirs (31a, 31b) adjacents renfermant une cavité (40) et étant disposés à une certaine distance (32) l'un de l'autre, la cavité étant réalisée sous la forme d'un espace d'air ou présentant un gaz, un liquide ou un polymère électroactif en tant que milieu optiquement variable ayant un indice de réfraction de matériau et une épaisseur optique étant définie par un indice de réfraction de la cavité (40) et par la distance (32) entre les éléments miroirs (31a, 31b), et
• des moyens de changement d'épaisseur optique pour faire varier l'épaisseur optique afin qu'une plage de longueurs d'onde extractible (22) de l'unité de filtrage (51, 57) soit modifiée, les moyens de changement d'épaisseur optique comprenant des moyens de réglage pour un changement de position (32) des éléments miroirs (31a, 31b) pour faire varier l'épaisseur optique en faisant varier la distance des éléments miroirs (31a, 31b) entre eux et/ou des moyens de réglage de l'indice de réfraction pour faire varier l'épaisseur optique par un changement de l'indice de réfraction de la cavité (40),
le système de mesure présentant une unité de régulation qui coopère avec les moyens de changement d'épaisseur optique et le détecteur (56, 59) de telle sorte qu'il soit possible de faire varier l'épaisseur optique, en particulier automatiquement, que la longueur d'onde d'émission (λ1, λ2, λ4, λLD, λLD1, λLD2) du rayonnement émis se situe dans la plage de longueurs d'onde extractible (22) et que l'épaisseur optique puisse être réglée en fonction d'une détection du détecteur (56, 59),
et une partie du rayonnement électromagnétique émis par la source de rayonnement (52, 53, 58) pouvant être découplée avec un élément de découplage de faisceau en tant que faisceau de référence, une longueur d'onde de référence pouvant être mesurée avec un capteur et l'épaisseur optique pouvant être réglée en fonction de la longueur d'onde de référence mesurée de telle sorte que la longueur d'onde de référence se situe dans la plage de longueurs d'onde extraite (22).

2. Système de mesure optique selon la revendication 1,
**caractérisé en ce**
**que** l'épaisseur optique peut être réglée à l'aide des moyens de changement d'épaisseur optique de telle sorte qu'une valeur de mesure détectée par le détecteur (56, 59) dépasse une valeur seuil définie.

3. Système de mesure optique selon l'une des revendications 1 à 2,
**caractérisé en ce**
**que** la plage de longueurs d'onde extractible (22) est définie par une longueur d'onde centrale (λ3) représentant un maximum d'extraction et une plage de tolérance autour de la longueur d'onde centrale (λ3) définie en fonction d'une courbe niveau d'extraction - longueur d'onde.

4. Système de mesure optique selon l'une des revendications 1 à 3,
**caractérisé en ce**
**que** l'unité de filtrage (51, 57) est conçue de telle sorte qu'une réflexion ou une transmission de rayonnement électromagnétique a lieu dans la plage de longueurs d'onde extractible (22).

5. Système de mesure optique selon l'une des revendications 1 à 4,
**caractérisé en ce**
**qu'**une longueur d'onde d'extraction pour le rayonnement extrait peut être dérivée de la variation de l'épaisseur optique pouvant être effectuée à l'aide des moyens de changement d'épaisseur optique, en particulier par une mesure avec le détecteur (56, 59).

6. Système de mesure optique selon l'une des revendications 1 à 5,
**caractérisé en ce**
**que** le détecteur (56, 59) est réalisé sous la forme d'une photodiode, d'un capteur surfacique CMOS ou PSD.

7. Système de mesure optique selon l'une des revendications 1 à 6,
**caractérisé en ce**
**que** le système de mesure présenté au moins une autre source de rayonnement ayant une autre longueur d'onde d'émission.

8. Système de mesure optique selon l'une des revendications 1 à 7,
**caractérisé en ce**
**que** l'épaisseur optique peut être réglée en appliquant un signal de commande électrique aux moyens de changement d'épaisseur optique, l'épaisseur optique pouvant être réglée en fonction d'une valeur du signal de commande appliqué.

9. Système de mesure optique selon l'une des revendications 1 à 8,
**caractérisé en ce**
**qu'**en présence d'une cavité (40) avec un milieu optiquement variable ayant un indice de réfraction de matériau, le milieu est matérialisé par un polymère électroactif et l'indice de réfraction de matériau peut être modifié de manière définie au moyen du signal de commande électronique afin de modifier l'épaisseur optique.

10. Système de mesure optique selon l'une des revendications 1 à 9,
**caractérisé en ce**
**que** le système présente une base de données dans laquelle est enregistrée une table de correspondance avec des distances (32) entre les éléments miroirs (31a, 31b) et des plages de longueurs d'onde respectives (22), les plages de longueurs d'onde respectives (22) étant en particulier enregistrées en fonction d'indices de réfraction de la cavité (40), la distance (32) entre les éléments miroirs (31a, 31b) et/ou l'indice de réfraction de la cavité (40) pouvant être réglés en fonction d'une longueur d'onde définie (22) à extraire au moyen de la table de correspondance.

11. Système de mesure optique selon la revendication 10,
**caractérisé en ce**
**qu'**un paramétrage pour la source de rayonnement (52, 53, 58) en vue de déterminer la longueur d'onde d'émission (λ1, λ2, λ4, λLD, λLD1, λLD2) est enregistré dans la base de données et la distance (32) entre les éléments miroirs (31a, 31b) et/ou l'indice de réfraction de la cavité (40) peuvent être réglés en fonction des paramètres du paramétrage, en particulier un paramétrage représentant une dépendance de la longueur d'onde d'émission (λ1, λ2, λ4, λLD, λLD1, λLD2) du courant et/ou de la température de la source de rayonnement (52, 53, 58).

12. Utilisation d'une unité de filtrage (51, 57)
• comportant au moins deux éléments miroirs (31a, 31b) à structure multicouche et au moins partiellement réfléchissants, les éléments miroirs (31a, 31b) étant orientés sensiblement parallèlement l'un à l'autre et chaque fois deux éléments miroirs adjacents (31a, 31b) renfermant une cavité (40) et étant disposés à une certaine distance (32) l'un de l'autre, la cavité étant réalisée sous la forme d'un espace d'air ou présentant un gaz, un liquide ou un polymère électroactif en tant que milieu optiquement variable ayant un indice de réfraction de matériau et une épaisseur optique étant définie par un indice de réfraction de la cavité (40) et par la distance (32) entre les éléments miroirs (31a, 31b), et
• comportant des moyens de changement d'épaisseur optique pour faire varier l'épaisseur optique afin qu'une plage de longueurs d'onde extractible (22) de l'unité de filtrage (51, 57) soit modifiée, les moyens de changement d'épaisseur optique comprenant des moyens de réglage pour un changement de position (32) des éléments miroirs (31a, 31b) pour faire varier l'épaisseur optique en faisant varier la distance des éléments miroirs (31a, 31b) entre eux et/ou des moyens de réglage de l'indice de réfraction pour faire varier l'épaisseur optique par un changement de l'indice de réfraction de la cavité (40),
dans un système de mesure optique pour déterminer les coordonnées de points, en particulier pour la mesure de distances, en particulier un appareil de mesure géodésique, une machine de mesure de coordonnées ou un dispositif de balayage, pour extraire le rayonnement électromagnétique de la plage de longueurs d'ondes définie (22) selon le principe de l'interférence,
le système de mesure présentant un détecteur (56,59) disposé de telle sorte que le rayonnement pouvant être extrait au moyen de l'unité de filtrage (51, 57) peut être détecté par le détecteur (56, 59) et présentant une unité de régulation qui coopère avec les moyens de changement d'épaisseur optique et le détecteur (56, 59) de telle sorte qu'il soit possible de faire varier l'épaisseur optique, en particulier automatiquement, que la longueur d'onde d'émission (λ1, λ2, λ4, λLD, λLD1, λLD2) du rayonnement émis se situe dans la plage de longueurs d'onde extractible (22) et que l'épaisseur optique puisse être réglée en fonction d'une détection du détecteur (56, 59) et
une partie du rayonnement électromagnétique émis par la source de rayonnement (52, 53, 58) pouvant être découplée avec un élément de découplage de faisceau en tant que faisceau de référence, une longueur d'onde de référence pouvant être mesurée avec un capteur et l'épaisseur optique pouvant être réglée en fonction de la longueur d'onde de référence mesurée de telle sorte que la longueur d'onde de référence se situe dans la plage de longueurs d'onde extraite (22).

13. Procédé de mesure pour déterminer les coordonnées de points, en particulier pour la mesure de distances, en particulier avec un appareil de mesure géodésique, une machine de mesure de coordonnées ou un dispositif de balayage, consistant à
• émettre un rayonnement électromagnétique ayant une longueur d'onde d'émission (λ1, λ2, λ4, λLD, λLD1, λLD2),
• extraire un rayonnement électromagnétique d'une plage de longueurs d'onde définie (22) selon le principe de l'interférence et
• détecter le rayonnement extrait avec un détecteur (56, 59),
**caractérisé en ce**
**que** le rayonnement électromagnétique est extrait au moyen d'une unité de filtrage (51,57),
• l'unité de filtrage (51, 57) présentant au moins deux éléments miroirs (31a, 31b) à structure multicouche et au moins partiellement réfléchissants, les éléments miroirs (31a, 31b) étant orientés sensiblement parallèlement l'un à l'autre et chaque fois deux éléments miroirs adjacents (31a, 31b) renfermant une cavité (40) et étant disposés à une certaine distance (32) l'un de l'autre, la cavité étant réalisée sous la forme d'un espace d'air ou présentant un gaz, un liquide ou un polymère électroactif en tant que milieu optiquement variable ayant un indice de réfraction de matériau et une épaisseur optique étant définie par un indice de réfraction de la cavité (40) et par la distance (32) entre les éléments miroirs (31a, 31b), et
• on fait varier l'épaisseur optique afin de modifier ainsi une plage de longueurs d'onde extractible (22) de l'unité de filtrage (51, 57) de telle sorte que la longueur d'onde d'émission se situe dans la plage de longueurs d'onde extractible (22), un changement de position des éléments miroirs (31a, 31b) étant effectué pour faire varier l'épaisseur optique en faisant varier la distance des éléments miroirs (31a, 31b) entre eux et/ou un changement de l'indice de réfraction étant effectué pour faire varier l'épaisseur optique,
• l'épaisseur optique étant variable, en particulier automatiquement, au moyen d'une unité de régulation coopérant avec des moyens de changement d'épaisseur optique et le détecteur (56, 59) de telle sorte que la longueur d'onde d'émission (λ1, λ2, λ4, λLD, λLD1, λLD2) du rayonnement émis se situe dans la plage de longueurs d'onde extractible (22) et que l'épaisseur optique puisse être réglée en fonction d'une détection du détecteur (56, 59) et
• une partie du rayonnement électromagnétique émis par la source de rayonnement (52, 53, 58) pouvant être découplée avec un élément de découplage de faisceau en tant que faisceau de référence, une longueur d'onde de référence pouvant être mesurée avec un capteur et l'épaisseur optique pouvant être réglée en fonction de la longueur d'onde de référence mesurée de telle sorte que la longueur d'onde de référence se situe dans la plage de longueurs d'onde extraite (22).
